# EUROPÄISCHE PATENTSCHRIFT

(11) **EP 3 402 024 B1**
(45) Veröffentlichungstag und Bekanntmachung des Hinweises auf die Patenterteilung: **30.12.2020**
(21) Anmeldenummer: 18164217.4
(22) Anmeldetag: 27.03.2018
(51) Int. Cl.: H01R 43/28, H02G 1/12, H01R 43/052

(54) **VORRICHTUNG ZUR BEARBEITUNG VON KABELN**
DEVICE FOR PROCESSING CABLE
DISPOSITIF DE TRAITEMENT DE CÂBLES

(30) Priorität: 09.05.2017 DE 102017109892
(43) Veröffentlichungstag der Anmeldung: 14.11.2018
(73) Patentinhaber: Metzner Maschinenbau GmbH, 89231 Neu-Ulm (DE)
(72) Erfinder: Sorg, Manfred, 89079 Ulm-Gögglingen (DE)
(74) Vertreter: Lorenz, Markus

(56) Entgegenhaltungen:
- WO-A2-2010/106005
- DE-C1- 19 605 498

## Beschreibung

Die Erfindung betrifft eine Vorrichtung zur Bearbeitung von Kabeln gemäß dem Oberbegriff von Anspruch 1.

Eine gattungsgemäße Vorrichtung ist aus der DE 196 05 498 C1 bekannt.

Es besteht ein Bedarf, die Industrie, insbesondere die Automotive-Industrie, mit abgeschnittenen und an den Enden abisolierten Kabelstücken mit einer definierten Länge zu versorgen. Hierzu sind aus dem Stand der Technik Abisoliervorrichtungen bekannt. Dabei wird ein Kabel von einer Kabeltrommel abgewickelt und in die Abisoliervorrichtung eingeführt. Die Abisoliervorrichtung weist ein Abschneidmesser und/oder ein Abisoliermesser auf. Mit dem Abschneidmesser wird ein Kabelstück mit einer definierten Länge abgeschnitten, mit dem Abisoliermesser wird ein Ende oder werden beide Enden des Kabelstücks abisoliert.

Das Kabelstück hat typischerweise zwei freiliegende Enden. Es kann ausreichend sein, wenn nur ein Kabelende abisoliert wird. Wenn nur ein Kabelende abisoliert werden soll, wird es im Stand der Technik bevorzugt, das in Vorschubrichtung des Kabelstücks hinten liegende Kabelende abzuisolieren. Dies hat den Grund, dass das in Vorschubrichtung vorne liegende Kabelende dazu neigt, aufzuspleißen, wenn es die Vorrichtung durchläuft. Dieses Problem besteht bei dem nachlaufenden Kabelende im Regelfall nicht.

Im Stand der Technik wird unterschieden zwischen einem sogenannten Vollabzug und einem Teilabzug. Unter einem Vollabzug ist zu verstehen, dass das abisolierte Stück des Kabelmantels (= Abisolierrest) vollständig von dem Draht bzw. der Litze abgezogen wird. Bei einem Teilabzug wird das abgeschnittene Stück der Kabelummantelung nur über ein Teilstück abgezogen und verbleibt somit noch auf dem Draht. Der spätere Anwender oder eine integrierte weitere Bearbeitungseinheit kann dann das Teilstück abziehen, so dass nur noch der Draht verbleibt. Der Teilabzug hat den Vorteil, dass bei einem Weitertransport und auch bei der Lagerung das Kabelende geschützt bleibt. Um das Kabelende zu schützen, wird bei dem vorauslaufenden Kabelende ein Teilabzug anstelle eines Vollabzugs bevorzugt.

Um bei einem Vollabzug zu ermöglichen, dass das abisolierte Stück des Kabelmantels bzw. der Abisolierrest ausgeworfen werden kann, ist es aus dem Stand der Technik bekannt, vor und/oder nach dem Abisoliermesser in der Vorschubstrecke des Kabels einen Freiraum zur Verfügung zu stellen, damit das abisolierte Stück des Kabelmantels herausfallen kann. Zu diesem Zweck ist es bekannt, in Vorschubrichtung vor dem Abisoliermesser ein schwenkbares Rohr oder eine linear verfahrbare Führungshülse einzusetzen. In Vorschubrichtung nach dem Abisoliermesser wird, wenn auch dort ein Freiraum benötigt wird, in der Regel eine linear verfahrbare Führungshülse eingesetzt.

Eine linear verfahrbare Führungshülse kann technisch relativ einfach aus dem Vorschubweg verfahren werden, um einen Abisolierrest aktiv auszuwerfen, hierzu wird auf die US 5,445,051 A1 verwiesen. Alternativ kann die linear verfahrbare Führungshülse auch so verschoben werden, dass sich die Führungshülse gar nicht erst im Kabelweg befindet, wenn ein Abisolierstück anfällt, hierzu wird auf die Figuren 5a und 5b der EP 0 860 044 B1 verwiesen.

Ein schwenkbares Rohr, so wie dies beispielsweise in der US 5,445,051 A1 gezeigt ist, benötigt eine größere axiale Länge und einen etwas aufwändigeren Aufbau zum Verschwenken, bietet jedoch den Vorteil, dass ein nachlaufendes Kabel, welches beispielsweise von einer Kabelrolle gespeist wird, während des Verschwenkens des Rohrs in diesem verbleiben kann. Ein Rücktransport des nachlaufenden Kabels aus dem schwenkbaren Rohr, so wie dies bei der linear verfahrbaren Führunghülse notwendig ist, kann somit entfallen. Daraus ergeben sich bessere Taktzeiten.

Aus der gattungsgemäßen Schrift, der DE 196 05 498 C1 ist eine Weiche in Form eines Führungsblocks bekannt, der in drei unterschiedlichen Ebenen Führungen bereitstellt, die es ermöglichen, das Kabelstück von der Vorschubstrecke auszulenken, um ein Ende des Kabelstücks einer seitlich positionierten Bearbeitungseinheit zuzuführen. Vorzugsweise ist die Bearbeitungseinheit dazu ausgebildet, ein Ende des Kabelstücks abzuisolieren und mit einer Aderendhülse zu versehen. Die Aderendhülse kann dabei durch einen Crimpprozess aufgebracht werden. Die sich in der Vorschubstrecke befindliche Schneideinrichtung dient daher lediglich dazu das Kabelstück von dem Kabel abzuschneiden.

Die aus der gattungsgemäßen Schrift bekannte Drahtführungsvorrichtung ermöglicht es dabei, beide Enden des abgeschnittenen Kabelstücks der gleichen Bearbeitungseinheit zuzuführen, damit diese das Kabelende entsprechend abisolieren und mit einer Aderendhülse versehen kann.

Die aus der gattungsgemäßen Schrift bekannte Lösung ist gegenüber dem vorbekannten Stand der Technik, nämlich der US 2,998,633 und der DE 44 12 577 A1 sehr vorteilhaft, da das Auslenken des Kabelstücks aus der Vorschubstrecke mit besonders einfachen Maßnahmen schnell und prozesssicher durchführbar ist. Problematisch bei der DE 196 05 498 C1 ist allerdings, dass das Kabelstück dadurch, dass dieses von der Vorschubstrecke ausgelenkt wird, verbogen wird. Bei dem nachfolgenden Weitertransport des Kabels, wozu gemäß der DE 196 05 498 C1 Vorschubrollen eingesetzt werden, kann es vorkommen, dass insbesondere das vordere Ende des Kabelstücks, wenn dieses ausgelenkt und folglich verbogen wurde, bei einem Weitertransport durch die Rollen nicht innerhalb der Vorschubstrecke verläuft. Dies kann zu Problemen innerhalb der Vorrichtung führen.

Ein weiteres Problem der in der DE 196 05 498 C1 offenbarten Drahtführungsvorrichtung besteht darin, dass die seitlich neben der Vorschubstrecke positionierte Bearbeitungseinheit zum Abisolieren und zum Aufbringen der Aderendhülsen auf einen bestimmten Kabeldurchmesser festgelegt ist. Das heißt, wenn die Vorrichtung ein Kabel mit einem abweichenden Kabeldurchmesser zu bearbeiten hat, sind hier Umbaumaßnahmen mit entsprechenden Rüstzeiten erforderlich.

Von Nachteil bei der DE 196 05 498 C1 ist ferner, dass die Bearbeitungseinheit einen direkten Zugriff auf die Schneideinrichtung bzw. die Weiche erschwert, da die Bearbeitungseinheit unmittelbar in diesem Arbeitsbereich positioniert ist und daher diesen Bereich an der Vorderseite bzw. der Bedienseite der Maschine abdeckt.

Ein weiterer Nachteil der DE 196 05 498 C1 besteht darin, dass die Weiche zumindest an der Seite der Schneideeinrichtung an der die Weiche positioniert ist, verhindert, dass die Vorrichtung bereits mit der Schneid-einrichtung einen Vollabzug durchführen kann, da sich die Weiche in dem Bereich befindet, indem der Abisolierrest ausgeworfen werden müsste.

Ein weiterer Nachteil der Lösung, so wie sie in der DE 196 05 498 C1 beschrieben ist, besteht darin, dass keine besonders kurzen Kabelstücke bearbeitet werden können, da die Kabelstücke bei einer Bewegung entgegen der Vorschubrichtung um die Kabelstücke der Bearbeitungseinheit zuführen zu können, zunächst die Schneideinrichtung passieren müssen. Die Kabelstücke müssen dabei eine Länge aufweisen, derart, dass das vordere Rollenpaar das Kabelstück auch dann noch erfassen und transportieren kann, wenn das hintere Ende des Kabelstücks in die Bearbeitungseinrichtung eingefahren ist.

Ein weiterer Nachteil der DE 196 05 498 C1 besteht auch darin, dass die Weiche nicht alle Kabeldurchmesser problemlos umlenken kann und es zu einem Verklemmen in den Führungsbahnen der Weiche kommt.

Zu weiteren bekannten Abisoliervorrichtungen wird auf die EP 0 860 044 B1 verwiesen.

Aus der DE 10 2009 031 076 B3 ist eine Vorrichtung zum wahlweisen Einlegen von Kabeln in einen von zwei Rotationskörpern begrenzten Spalt mit einem Ein- und einem Austrittskeil bekannt, wobei die Rotationskörper auf oder an einem Gehäuse gelagert sind und einen veränderlichen Abstand voneinander haben und wobei auf oder an dem Gehäuse ein parallel zur Achse der Rotationskörper verschiebbarer Revolver mit wenigstens zwei Kabelführungen vorgesehen ist, die jeweils aus zwei Teilführungen bestehen, in denen jeweils ein durchlaufendes Kabel aufgenommen ist, wobei die Kabel durch eine Drehung des Revolvers und durch eine anschliessende Verschiebung des Revolvers in den Spalt überführbar, mit den Rotationskörpern in Eingriff bringbar und durch diese vorschiebbar sind. Die Teilführungen haben an ihren den Rotationskörpern zugewandten Enden jeweils eine keil- oder kegelförmige Verjüngung und die Verjüngungen sind zumindest anteilig in die Ein- und Austrittskeile des Spaltes eingreifend verlängert.

Der vorliegenden Erfindung liegt die Aufgabe zugrunde, die aus der DE 196 05 498 C1 bekannten Vorrichtung weiter zu verbessern, insbesondere die Prozesssicherheit zu erhöhen.

Erfindungsgemäß wird diese Aufgabe durch die Merkmale des Anspruchs 1 gelöst.

Die erfindungsgemäße Vorrichtung zur Bearbeitung von Kabeln weist eine Vorschubeinrichtung auf, um das Kabel entlang einer Vorschubstrecke zu transportieren und zu positionieren. Ferner ist eine Schneideinrichtung zum Abschneiden eines Kabelstücks von dem Kabel vorgesehen, derart, dass das Kabel zwei Enden aufweist. Erfindungsgemäß vorgesehen ist ferner wenigstens eine Bearbeitungseinheit zum Bearbeiten wenigstens eines Endes des Kabels. Ferner ist eine Weiche mit einer Mehrzahl von Führungen und eine Steuerung vorgesehen, um die Weiche in der Vorschubstrecke derart zu positionieren, dass das Kabelstück in eine der Führungen einfahrbar ist, wobei wenigstens eine Führung ausgebildet ist, um das Kabelstück von der Vorschubstrecke auszulenken, um ein Ende des Kabelstücks der wenigstens einen Bearbeitungseinheit zuzuführen. Erfindungsgemäß ist ferner vorgesehen, dass die Vorschubeinrichtung wenigstens ein motorisch angetriebenes Bandförderpaar umfasst, wobei das Kabelstück zwischen den beiden Bandförderern des Bandförderpaares durchführbar ist und/oder die Vorschubeinrichtung wenigstens ein motorisch angetriebenes Rollenpaar umfasst, wobei das Kabelstück zwischen den Rollen des Rollenpaars durchführbar ist, wobei zusätzlich zu dem Rollenpaar eine Kabelführung vorgesehen ist, welche in der Vorschubstrecke des Kabelstücks zwischen den beiden Rollen positioniert ist und für beide Rollen jeweils eine Aussparung aufweist, derart, dass die Rollen in die Kabelführung eingreifen können, um das Kabelstück zu transportieren.

Das grundsätzliche Funktionsprinzip der erfindungsgemäßen Vorrichtung entspricht dem in der DE 196 05 498 C1 dargestellten Funktionsprinzip, insbesondere bezüglich der Zuführung eines vorderen und/oder hinteren Endes des Kabelstücks zu einer Bearbeitungseinheit.

Die Bearbeitungseinheit ist außerhalb der Vorschubstrecke angeordnet, das heißt nicht in die Vorschubstrecke integriert.

Dadurch, dass die Vorschubeinrichtung wenigstens ein motorisch angetriebenes Bandförderpaar umfasst und/oder wenigstens ein motorisch angetriebenes Rollenpaar in Verbindung mit einer spezifischen Kabelführung aufweist, werden die Nachteile des Standes der Technik gelöst, es können nunmehr auch Kabelstücke mit einem durch die Führung der Weiche gebogenen Ende prozesssicher in der Vorschubstrecke gehalten werden, wenn das Kabelstück nach der Bearbeitung durch die Bearbeitungseinheit durch die Vorschubeinrichtung weitertransportiert wird.

Der Erfinder hat erkannt, dass ein Bandförderpaar anstelle eines Rollenpaars bereits ausreichend ist, um das Kabelstück prozesssicher zu transportieren. Im Unterschied zu einem Rollenpaar können die Bandförderer eines Bandförderpaars das Kabelstück zwischen sich zuverlässig einklemmen und vorwärts transportieren, ohne dass das vordere Ende des Kabels ausweicht. Vorzugsweise ist dabei vor und/oder nach dem Bandförderpaar jeweils ein bekanntes Führungsrohr angeordnet, durch welches das Kabelstück dem Bandförderpaar zugeführt bzw. durch welches das Kabelstück weitertransportiert werden kann.

Das Bandförderpaar kann zudem mehr Kraft aufbringen um ggf. bereits mittels der Schneideinrichtung einen Teil- und/oder Vollabzug durchzuführen.

Das erfindungsgemäße wenigstens eine motorisch angetriebene Rollenpaar in Verbindung mit der erfindungsgemäßen Kabelführung ermöglicht es ebenfalls, dass das Kabelstück, auch in gebogenem Zustand, prozesssicher auch im Bereich der Rollen transportiert werden kann. Die Kabelführung übernimmt dabei zumindest in dem Bereich, in dem die Rollen in die Aussparungen der Kabelführung eingreifen, eine seitliche Führung des Kabels, so dass dieses, insbesondere dessen vorderes Ende, nicht seitlich ausweichen und die Vorschubstrecke verlassen kann. Dadurch, dass die Rollen in die Aussparungen der Kabelführung eingreifen, kann das Kabelstück ferner auch nicht in diese Richtung ausweichen, so dass das Kabelstück auch im Bereich der Rollen prozesssicher geführt wird.

Vorzugsweise ist die Kabelführung derart gestaltet, dass diese das Kabelstück auch vor und/oder nach dem Rollenpaar umfangsseitig geschlossen führt. Dadurch ist das Kabelstück auch im Eingangsbereich vor dem Rollenpaar sowie vorzugsweise auch im Ausgangsbereich nach dem Rollenpaar zuverlässig geführt. Die Kabelführung kann das Kabelstück in ein vorzugsweise bündig angeschlossenes Führungsrohr weiterleiten. Vorzugsweise kann auch die Zuführung in die Kabelführung durch ein Führungsrohr erfolgen. Vorzugsweise ist die Weiche oder die Schneideinrichtung unmittelbar an die Kabelführung angeschlossen.

Von Vorteil ist es, wenn die Kabelführung eine rohrförmige Grundform aufweist.

Von Vorteil ist es ferner, wenn die Kabelführung und die beiden Rollen derart angeordnet sind, dass die Rollen die Aussparungen derart verschließen, dass das Kabelstück entlang der Aussparungen von der Kabelführung und den beiden Rollen umfangsseitig wenigstens annähernd vollständig geschlossen umfasst ist.

Dadurch, dass die Rollen die Aussparungen wenigstens annähernd vollständig verschließen, wird das Kabelstück auch im Bereich des Rollenpaars zuverlässig geführt.

Von Vorteil ist es, wenn die Aussparungen in die Kabelführung derart eingebracht sind, dass zwei gegenüberliegend angeordnete seitliche Stege verbleiben, welche ein vorderes Ende der Kabelführung mit einem hinteren Ende der Kabelführung verbinden, und welche geeignet sind, das Kabelstück in der Kabelführung im Bereich der Aussparung gemeinsam mit den Rollen zu führen.

Durch diese Ausgestaltung ergibt sich eine besonders prozesssichere Führung des Kabelstücks.

Von Vorteil ist es, wenn die Aussparungen in Längsrichtung betrachtet, jeweils die Form eines Kreissegments aufweisen und der Kreisbogen des Kreissegments wenigstens in dem Bereich, in dem die Rollen in die Aussparungen eingreifen, an den Radius der jeweiligen Rolle angepasst ist.

Durch eine derartige Ausbildung der Aussparungen kann die Rolle möglichst bündig in die Aussparung eingreifen und diese verschließen.

Von Vorteil ist es, wenn der Abstand zwischen den Rollen des Rollenpaars veränderbar und die Kabelführung zur Anpassung an den veränderten Abstand zwischen den Rollen austauschbar ist und/oder dass der Abstand zwischen den Bandförderern des Bandförderpaars veränderbar ist.

Die Veränderung des Abstands zwischen den Rollen des Rollenpaars bzw. zwischen zwei den Bandförderern des Bandförderpaars kann vorzugsweise elektromotorisch erfolgen. Eine Anpassung des Abstands erfolgt im Regelfall entsprechend des Durchmessers des zu bearbeitenden Kabels. Vorzugsweise ist die Kabelführung mit einem Schnellverschluss, gegebenenfalls auch mit einer Schraubverbindung zwischen den Rollen eines Rollenpaars befestigt, so dass die Kabelführung schnell ausgetauscht ist und gegebenenfalls eine Kabelführung, die geeignet ist, ein dickeres oder dünneres Kabel zu führen, zwischen den Rollen erneut positioniert werden kann.

Von Vorteil ist es, wenn wenigstens ein Bandförderpaar in Vorschubrichtung vor der Weiche und ein Bandförderpaar nach der Weiche vorgesehen ist, oder dass wenigstens ein Rollenpaar vor der Weiche und ein Rollenpaar nach der Weiche vorgesehen ist.

Durch die Ausbildung von zumindest zwei Bandförderpaaren bzw. zwei Rollenpaaren, wobei hier auch Vermischungen möglich sind, d. h. ein Rollenpaar kann auch mit einem Bandförderpaar kombiniert werden, lässt sich das Kabel und insbesondere das Kabelstück in besonders geeigneter Weise transportieren. Die Ausbildung von zwei Rollenpaaren bzw. zwei Bandförderpaaren ermöglicht zudem, dass das Kabelstück gezielt in Vorschubrichtung und entgegen der Vorschubrichtung entlang der Vorschubstrecke transportiert werden kann, damit sowohl ein Ende des Kabelstücks als auch ein Anfang des Kabelstücks der wenigstens einen Bearbeitungseinheit zugeführt werden kann.

Um ein Ende des Kabelstücks zu bearbeiten, genügt es bereits, wenn die Weiche nur eine Führung aufweist, um das Kabelstück aus der Vorschubstrecke auszulenken.

Erfindungsgemäß kann vorgesehen sein, dass die Weiche wenigstens drei Führungen, vorzugsweise drei Führungen oder fünf Führungen, aufweist, wobei eine der Führungen ausgebildet ist, um das Kabelstück entlang der Vorschubstrecke zu führen und die anderen Führungen ausgebildet sind, um das Kabelstück von der Vorschubstrecke auszulenken, um ein Ende des Kabelstücks wenigstens einer der wenigstens einen Bearbeitungseinheit zuzuführen.

Üblicherweise dürfte es von Vorteil sein, wenn die Weiche über drei Führungen verfügt, so wie dies in der DE 196 05 498 C1 dargestellt ist. Damit ist es möglich, durch einen Transport des Kabelstücks in Vorschubrichtung, das vordere Ende des Kabelstücks umzulenken und der Bearbeitungseinheit zuzuführen, während bei einem Transport des Kabelstücks entgegen der Vorschubrichtung das hintere Ende des Kabelstücks der Bearbeitungseinheit zugeführt werden kann.

Die Bearbeitungseinheit kann einen beliebigen Bearbeitungsvorgang durchführen. Vorzugsweise sieht der Bearbeitungsvorgang vor, dass das Kabelende abisoliert und eine Aderendhülse angeschlagen wird. Es können jedoch auch andere Bearbeitungsvorgänge vorgesehen sein. Möglich ist es z. B. auch, eine Behandlung mit Hart- oder Weichlot vorzusehen. Ferner ist es auch möglich, dass die Bearbeitungseinheit nur zum Abisolieren oder nur zum Anschlagen von Aderendhülsen, vorzugsweise durch Crimpen ausgebildet ist.

Gegebenenfalls kann der Bearbeitungsvorgang des Abisolierens von der Schneideinrichtung übernommen werden.

Es bietet sich an, bei einer Ausbildung der Weiche mit wenigstens drei Führungen die beiden Führungen, die das Kabelstück aus der Vorschubrichtung auslenken, so zu gestalten, dass die jeweils ausgelenkten Enden des Kabelstücks beide derselben Bearbeitungseinheit zugeführt werden. Es ist somit nur eine Bearbeitungseinheit notwendig, um den vorgesehenen Bearbeitungsvorgang durchzuführen. Die Bearbeitungseinheit kann dabei vorzugsweise seitlich der Vorschubstrecke angeordnet sein, vorzugsweise in räumlicher Nähe bzw. benachbart zu der Weiche.

In einer Ausbildung der Erfindung mit fünf Führungen bietet es sich an, jeweils zwei Führungen derart zu gestalten, dass diese das Kabelstück einer bzw. derselben Bearbeitungseinheit zuführen, das heißt, dass vorzugsweise zwei Bearbeitungseinheiten vorgesehen sind. Dabei kann vorgesehen sein, dass die beiden Bearbeitungseinheiten unterschiedliche Bearbeitungsvorgänge durchführen oder für Kabel mit unterschiedlichen Größen vorgesehen sind. Die Rüstzeiten, um die Vorrichtung auf ein Kabel mit einem anderen Durchmesser umzurüsten, können somit reduziert werden bzw. entfallen. Durch ein entsprechendes Stellen der Weiche kann steuerungstechnisch veranlasst werden, dass die Kabelstücke nun einer zweiten, für die Bearbeitung des veränderten Durchmessers ausgelegten Bearbeitungseinheit zugeführt wird.

Es kann jedoch genauso gut vorgesehen sein, dass die zweite Bearbeitungseinheit einen anderen Bearbeitungsvorgang durchführt, der aus Taktgründen oder aus anderen Gründen von der ersten Bearbeitungseinheit nicht geleistet wird oder der nur optional für bestimmte Kabelstücke vorgesehen ist.

Die Bearbeitungseinheiten sind vorzugsweise an zwei gegenüberliegenden Seiten der Vorschubstrecke angeordnet. Vorzugsweise befindet sich eine Bearbeitungseinheit an der Vorderseite bzw. der Bedienseite der Vorrichtung und eine Bearbeitungseinheit an der Rückseite, gegebenenfalls auch innerhalb eines Maschinengehäuses der Vorrichtung.

Von Vorteil ist es, wenn wenigstens die Vorschubeinrichtung, die Schneideinrichtung und die Weiche an oder in einem Maschinengehäuse festgelegt sind, wobei die Bearbeitungseinheit mit dem Maschinengehäuse oder mit einer mit dem Maschinengehäuse verbundenen Plattform schwenkbar oder linear verschiebbar verbunden ist, oder die Bearbeitungseinheit auf einem von dem Maschinengehäuse unabhängig verfahrbaren Gestell angeordnet ist, derart, dass die Bearbeitungseinheit bedarfsweise aus einem Arbeitsbereich entfernbar ist.

Der Erfinder hat erkannt, dass es von Nachteil für das Handling der Maschine ist, dass die Bearbeitungseinheit einen direkten Zugriff auf die wesentlichen Module, nämlich die Schneideinrichtung, die Weiche und die Vorschubeinheiten, erschwert bzw. diese teilweise verdeckt. Andererseits ist die Positionierung der Bearbeitungseinheit genau in diesem Arbeitsbereich optimal, damit das Kabelstück prozesssicher der Bearbeitungseinheit zugeführt werden kann und um sicherzustellen, dass auch relativ kurze Kabelstücke, die von der Vorschubeinheit zum Transport noch erfasst werden müssen, bearbeitet werden können. Typischerweise müssen die Kabelstücke mindestens eine Länge aufweisen, die sicherstellt, dass die jeweilige Vorschubeinheit, die das Kabelstück der Bearbeitungseinheit zuführt, das Kabelstück selbst dann noch erfasst und transportieren kann, wenn ein Ende des Kabelstücks in die Bearbeitungseinheit eingeführt ist.

Der Erfinder hat erkannt, dass durch eine schwenkbare oder linear verfahrbare Anordnung der Bearbeitungseinheit an dem Maschinengehäuse bzw. deren Plattform ein einfacher Zugriff auf die Schneideinrichtung bzw. die Weiche und die Vorschubeinrichtung möglich ist. Die Bearbeitungseinheit kann vorzugsweise aus dem Arbeitsbereich geschwenkt werden. Vorgesehen sein können Fixierelemente, um die Bearbeitungseinheit anschließend wieder definiert in dem Arbeitsbereich festzulegen. Alternativ kann die Bearbeitungseinheit auch auf einem unabhängig von dem Maschinengehäuse verfahrbaren Gestell angeordnet sein. Diese Ausgestaltung ermöglicht es zudem, die Bearbeitungseinheit vergleichsweise schnell und unkompliziert auszuwechseln, wenn es notwendig sein sollte, der Vorrichtung eine neue Bearbeitungseinheit, beispielsweise für geänderte Durchmesser oder zur Durchführung von anderen Bearbeitungsvorgängen, zuzuführen.

Von Vorteil ist es insbesondere, wenn die Bearbeitungseinheit, die an der Vorder- bzw. der Bedienseite der Vorrichtung positioniert ist, verschwenkbar, linear verfahrbar oder auf einem unabhängig verfahrbaren Gestell angeordnet ist. Ergänzend oder alternativ kann auch vorgesehen sein, dass weitere Bearbeitungseinheiten, die mit der Vorrichtung verbunden sind, unter anderem auch Bearbeitungseinheiten, die an der Rückseite oder im Maschinengestell der Vorrichtung angeordnet sind, linear verschiebbar oder verschwenkbar oder auf einem von dem Maschinengehäuse unabhängig verfahrbaren Gestell angeordnet sind. Ein besonderer Vorteil ergibt sich jedoch, wenn die Bearbeitungseinheit bzw. die Bearbeitungseinheiten, die an der Vorderseite des Maschinengehäuses festgelegt sind, entsprechend verschwenkbar oder linear verschiebbar oder auf einem unabhängigen Gestell angeordnet sind.

In einer Weiterbildung der Erfindung können wenigstens zwei Bearbeitungseinheiten vorgesehen sein, wobei die Bearbeitungseinheiten linear hintereinander und/oder derart angeordnet sind, dass die Vorschubstrecke zwischen zwei Bearbeitungseinheiten verläuft.

Dadurch, dass die erfindungsgemäße Vorrichtung über wenigstens zwei Bearbeitungseinheiten verfügt, können komplexere Tätigkeiten durchgeführt und/oder gegebenenfalls die Rüstzeiten reduziert werden.

Von Vorteil ist es, wenn die Führung, um das Kabelstück von der Vorschubstrecke auszulenken, einen Eingang, einen umfangsseitig geschlossenen Führungskanal und einen Ausgang aufweist, wobei sich der Durchmesser des Führungskanals zwischen dem Eingang und dem Ausgang verjüngt.

Der Erfinder hat in nicht naheliegender Weise festgestellt, dass sich die Auslenkung des Kabelstücks dadurch verbessern lässt, dass sich der Führungskanal vom Eingang zum Ausgang verjüngt bzw. verengt. Dies verbessert die Umlenkung und ermöglicht auch die Verarbeitung von dickeren Kabeln. Durch die Verjüngung des Führungskanals in Richtung des Ausgangs wird dort dann wieder eine präzisere Positionierung bzw. Führung des Kabelstücks in Richtung auf die Bearbeitungseinheit sichergestellt. Eine derartige Gestaltung bietet sich insbesondere für dickere Kabelstücke an, die sich nicht so einfach umbiegen lassen.

Der Eingang und/oder Ausgang kann angefast bzw. mit einer trichterförmigen Erweiterung versehen sein, die es insbesondere vereinfacht, das Kabelstück in den Führungskanal einzuführen. Die trichterförmige Anfasung des Eingangs oder des Ausgangs ist jedoch nicht als Verjüngung des Durchmessers des Führungskanals, der sich an den Eingang bzw. den Ausgang anschließt, zu verstehen.

Von Vorteil ist es, wenn der Führungskanal einen ersten, dem Eingang zugewandten Abschnitt aufweist, wobei der erste Abschnitt kreisbogenförmig verläuft und einen ersten Durchmesser aufweist, und wobei sich an den ersten Abschnitt ein zweiter, dem Ausgang zugewandter Abschnitt anschließt, welcher vorzugsweise im Wesentlichen linear verläuft, wobei sich der zweite Abschnitt von dem ersten Durchmesser in Richtung auf den Ausgang auf einen zweiten Durchmesser verjüngt bzw. verengt.

Eine derartige Gestaltung hat sich als besonders vorteilhaft herausgestellt, um auch dicke Kabelstücke prozesssicher umlenken zu können. Insbesondere die Gestaltung mit einem ersten größeren Durchmesser im ersten Abschnitt und einem zweiten Abschnitt, der sich dann in Richtung auf den Ausgang auf einen zweiten Durchmesser verjüngt, hat sich hier als besonders geeignet herausgestellt.

Vorzugsweise ist der erste Durchmesser 5 bis 50 %, besonders bevorzugt 10 bis 40 % und ganz besonderes bevorzugt 20 bis 30 %, insbesondere 25 %, größer als der zweite Durchmesser. Ein eventuell angefaster Eingang oder Ausgang des Führungskanals zählt hierbei nicht als erster oder zweiter Durchmesser.

Die Erfinder haben erkannt, dass es besonders geeignet ist, wenn der zweite Durchmesser einen Durchmesser von 4 bis 7 mm, vorzugsweise 6 mm, aufweist und der zweite Durchmesser einen Durchmesser von 7,5 bis 10 mm, vorzugsweise 8 mm aufweist. Der erste Abschnitt mit dem kreisbogenförmigen Verlauf kann vorzugsweise einem Radius von 20 bis 50 mm, vorzugsweise einem Radius von 30 mm, folgen.

Erfindungsgemäß kann vorgesehen sein, dass ein erster Teilabschnitt des ersten Abschnitts, der dem Eingang zugewandt ist, zunächst einen geringeren Durchmesser aufweist und sich der Führungskanal erst im weiteren Verlauf des ersten Abschnitts bis zu dem ersten Durchmesser aufweitet.

Von Vorteil ist es, wenn die Weiche eine Mehrzahl von Platten, die zu einem Block zusammengesetzt sind, aufweist.

Der Erfinder hat erkannt, dass sich eine Ausgestaltung der Weiche derart, dass diese eine Mehrzahl von Platten aufweist, die zu einem Block zusammengesetzt sind, in besonderer Weise eignet. Der Block lässt sich in einfacher Weise durch eine Steuerung, beispielsweise mit Hilfe einer Hubeinrichtung, verschieben. Der Block lässt sich mit besonders geringen Abmessungen bauen, so dass die Wege, die der Block bewegt werden muss, um verschiedene Führungen in die Vorschubstrecke einzubringen, gering und damit die Taktzeiten kurz sind. Ferner hat sich gezeigt, dass sich in Platten in besonders einfacher Weise die notwendigen Führungen einbringen lassen.

Von Vorteil ist es, wenn die Führungen, um das Kabelstück von der Vorschubstrecke auszulenken, jeweils durch zwei zusammengesetzte Platten ausgebildet sind, wobei jede Platte eine Führungskontur in der Art einer Führungsrinne aufweist, und zwei Führungskonturen zusammengesetzt eine Führung bilden.

Die Führungskontur kann in die jeweiligen Platten in einfacher Weise, beispielsweise mittels Fräsen, beispielsweise mittels eines Kugelkopffräsers, eingebracht werden. Durch das Zusammensetzen von zwei Platten bildet sich dann eine geeignete Führung mit einem Eingang, einem Ausgang und dem Führungskanal mit einem gewünschten Verlauf aus.

Von Vorteil ist es, wenn wenigstens eine Platte an ihren gegenüberliegenden Hauptflächen jeweils eine Führungskontur aufweist, wobei an beiden Hauptflächen jeweils eine weitere Platte ansetzbar ist, welche eine Führungskontur aufweist, die mit der in die jeweilige Hauptfläche eingebrachte Führungskontur derart korrespondiert, dass die drei Platten einen Block mit zwei vollständig geschlossenen Führungen ausbilden, wobei die Ausgänge der Führungen in dem Block in derselben Seitenfläche, vorzugsweise übereinander, angeordnet sind, während sich die Eingänge der Führungen an gegenüberliegenden Seitenflächen des Blocks befinden.

Eine Ausbildung wenigstens einer Platte, die an ihren gegenüberliegenden Hauptflächen jeweils eine Führungskontur ausbildet, hat sich als besonders geeignet herausgestellt, um einen kompakten Aufbau der Weiche sicherzustellen. In einfacher Weise kann in die jeweiligen Hauptflächen, beispielsweise durch Fräsen, eine geeignete Führungskontur eingebracht werden. Durch eine derartige Ausbildung lässt sich die Anzahl der Platten auf ein Minimum reduzieren. Ferner wird durch diese Ausbildung sichergestellt, dass sich die Ausgänge der Führungen eng benachbart, vorzugsweise übereinander, befinden, so dass es in besonders einfacher Weise möglich ist, die aus den Ausgängen ausgeführten Kabelstücke in die vorgesehene Bearbeitungseinheit einzuführen, ohne dass diese zusätzlich bewegt werden muss, damit das Kabelstück in die Bearbeitungseinheit eingeführt werden kann.

Vorzugsweise bilden die Führungskonturen jeweils eine Hälfte der Führung aus, so dass zwei Führungskonturen gemeinsam eine Führung bilden.

Der Erfinder hat erkannt, dass es von Vorteil ist, wenn die verschiedenen Führungen in der Weiche bzw. in dem Block in unterschiedlichen Ebenen eingebracht sind, so dass durch eine entsprechende schrittweise Verstellung der Weiche die jeweils geeignete Führung in die Vorschubstrecke eingebracht werden kann.

Die Führung, um das Kabelstück entlang der Vorschubstrecke zu führen, kann ebenfalls durch eine Platte oder durch zwei Platten bereitgestellt werden. Vorzugsweise ist die Führung, um das Kabelstück entlang der Vorschubstrecke zu führen, jedoch als einfache Führungshülse bzw. quaderförmig mit einer Axialbohrung ausgebildet. Die Herstellung einer Führung, deren Bohrung sich nur in Linearrichtung erstreckt, ist vergleichsweise einfach möglich.

Von Vorteil ist es, wenn wenigstens der Teil der Weiche, der die Führungen ausbildet, um das Kabelstück von der Vorschubstrecke auszulenken, aus einem reibungsoptimierten Kunststoff, vorzugsweise einem Kunststoff mit Graphit, besonders bevorzugt einem Polyethylen und ganz besonders bevorzugt einem UHMW-Polyethylen ausgebildet ist.

In ganz besonderem Maße eignet sich ein UHMW-Polyethylen der mit Schmierstoff versetzt ist.

Von Vorteil ist es, wenn die Platten der Weiche aus einem reibungsoptimierten Kunststoff, vorzugsweise einem Kunststoff mit Graphit, besonders bevorzugt einem Polyethylen und ganz besonders bevorzugt einem UHMW-Polyethylen, ausgebildet sind.

Die vorzugsweise genannten Ausführungsformen für das Teilstück der Weiche gelten auch für die Platten der Weiche analog.

Es hat sich gezeigt, dass sich die Platten der Weiche in besonders einfacher Weise aus dem vorgenannten Kunststoff herstellen lassen und durch die Optimierung der Gleiteigenschaften die Kabelstücke besonders prozesssicher ausgelenkt werden können.

Erfindungsgemäß kann vorgesehen sein, dass die Weiche in Vorschubrichtung des Kabels nach der Schneideinrichtung angeordnet ist und sich die Weiche zwischen der Schneideinrichtung und einem Bandförderpaar oder einem Rollenpaar befindet.

Vorzugsweise ist die Weiche eng benachbart an der Schneideinrichtung und dem Bandförderpaar oder dem Rollenpaar angeordnet, so dass die Wege kurz sind und sich somit auch möglichst kurze Kabelstücke bearbeiten lassen.

Grundsätzlich kann die Weiche in Vorschubrichtung des Kabels sowohl nach als auch vor der Schneideinrichtung angeordnet sein. Eine Ausbildung der Weiche nach der Schneideinrichtung bietet sich jedoch an, um besonders kurze Kabelstücke bearbeiten zu können. Insofern ein Kabelstück entgegen der Vorschubrichtung, das heißt rückwärts transportiert und durch eine geeignete Führung umgelenkt wird, erfolgt der Transport mittels eines Bandförderpaares oder eines Rollenpaares, das sich in Vorschubrichtung nach der Weiche befindet. Nachdem das Kabelstück auch dann das Bandförderpaar bzw. das Rollenpaar nicht verlassen sollte, wenn das Kabelstück in die Bearbeitungseinheit eingeführt ist, muss das Kabelstück eine Länge aufweisen, die zumindest dem Wegstück zwischen dem Bandförderpaar oder dem Rollenpaar und der Bearbeitungseinheit entspricht. Insofern auf diesem Wegstück auch noch die Schneideinrichtung angeordnet ist, verlängert sich das notwendige Wegstück um die entsprechende Länge der Schneideinrichtung, die das Kabelstück auf dem Weg zu der Bearbeitungseinheit durchlaufen muss. Dies war bei der DE 196 05 498 C1 der Fall. Es ist allerdings zur Bearbeitung von möglichst kurzen Kabelstücken von Vorteil, insbesondere wenn nur die hinteren Enden des Kabelstücks bearbeitet werden sollen, die Weiche in Vorschubrichtung des Kabels nach der Schneideinrichtung anzuordnen.

Erfindungsgemäß kann vorgesehen sein, dass die Vorrichtung ausgebildet ist, um einen Teilabzug am vorderen und/oder am hinteren Ende des Kabelstücks durchzuführen, und/oder dass die Vorrichtung eingerichtet ist, um zumindest am in Vorschubrichtung hinteren Ende des Kabelstücks einen Vollabzug durchzuführen.

In der gattungsgemäßen Schrift, der DE 196 05 498 C1 ist eine Drahtführungsvorrichtung offenbart, bei der die in der Vorschubstrecke positionierte Schneideinrichtung das Kabel auf eine vorbestimmte Länge abschneidet. Der Abisoliervorgang und/oder der Vorgang des Aufcrimpens einer Aderendhülse wird dann von der Bearbeitungseinheit, dort als Bearbeitungseinrichtung bezeichnet, durchgeführt.

Der Erfinder hat erkannt, dass es von Vorteil ist, wenn die Schneideinrichtung nicht nur abschneiden, sondern gegebenenfalls auch abisolieren kann. Derartige Lösungen sind aus dem Stand der Technik bekannt, wozu beispielsweise auf die EP 0 860 044 B1 bzw. die US 5,445,051 A1 verwiesen wird. Die Verwendung einer derartigen Schneideinrichtung im Rahmen der erfindungsgemäßen Lösung hat sich - optional - als besonders geeignet herausgestellt, damit auch Kabel bearbeitet werden können, die lediglich einen Teilabzug benötigen. Hierzu kann die Weiche vorzugsweise derart gestellt werden, dass das Kabelstück in Vorschubrichtung entlang der Vorschubstrecke transportiert wird. Die Schneideinrichtung kann dann gegebenenfalls am vorderen und/oder am hinteren Ende des Kabelstücks einen Teilabzug herstellen. Ein Umlenken des Kabels ist in diesem Fall nicht zwingend notwendig. Damit können auch, ohne dass Umrüstmaßnahmen erforderlich sind, Kabelstücke mit einem Teilabzug erzeugt werden. Ferner ist es möglich, dass die Schneideinrichtung durch die Erzeugung eines Kabelstücks mit einem Teilabzug die weitere Bearbeitung durch die Bearbeitungseinheit vorbereitet. Es kann also auch weiterhin vorgesehen sein, dass das Kabelstück aus der Vorschubstrecke ausgelenkt wird, damit zumindest ein Ende des Kabelstücks einer Bearbeitungseinheit zur weiteren Bearbeitung zugeführt werden kann.

Es kann auch vorgesehen sein, dass an einem Ende mittels der Schneideinrichtung ein Teil- oder Vollabzug hergestellt wird und nur das andere Ende der Bearbeitungseinheit zugeführt wird.

Ferner kann es von Vorteil sein, wenn die erfindungsgemäße Vorrichtung alternativ oder ergänzen auch dazu ausgerüstet ist, einen Vollabzug durchzuführen. Auch hierzu wird auf die beiden vorgenannten Schriften verwiesen. Derartige Vorrichtungen sind auch aus dem weiteren Stand der Technik, insbesondere auch von der Anmelderin, bekannt. Die Herstellung eines Vollabzugs kann, insbesondere am hinteren Ende des Kabelstücks, von Vorteil sein. Hierzu muss nicht unbedingt vorgesehen sein, dass das Kabelstück anschließend aus der Vorschubstrecke ausgelenkt und einer Bearbeitungseinheit zugeführt werden muss. Insbesondere wenn der Vollabzug am hinteren Ende des Kabels hergestellt wird, kann auch vorgesehen sein, dass das Kabelstück lediglich in Vorschubrichtung weitertransportiert wird. Selbstverständlich ist es jedoch auch möglich, insbesondere das hintere Ende des Kabels durch eine entsprechende Stellung der Weiche umzulenken und einer Bearbeitungseinrichtung zur weiteren Bearbeitung des Kabelendes, das dann bereits abisoliert ist, zuzuführen.

Die vorgenannte erfindungsgemäße Ausgestaltung, insbesondere die Anpassung der entsprechenden Maschinensteuerung und die Verwendung einer entsprechenden Schneideinrichtung hat sich als besonders geeignet herausgestellt, um die erfindungsgemäße Vorrichtung noch universeller einsetzen zu können.

Von Vorteil ist es, wenn die Steuerung eingerichtet ist, um die Weiche wenigstens in die nachfolgenden vier Positionen zu stellen:
eine erste Position, um das Kabelstück unausgelenkt entlang der Vorschubstrecke in und entgegen der Vorschubrichtung zu transportieren;
eine zweite Position, um das in Vorschubrichtung transportierte Kabelstück von der Vorschubstrecke auszulenken, um ein in Vorschubrichtung vorne liegendes Ende des Kabelstücks der wenigstens einen Bearbeitungseinheit zuzuführen;
eine dritte Position, um das entgegen der Vorschubrichtung transportierte Kabelstück von der Vorschubstrecke auszulenken, um ein in Vorschubrichtung hinten liegendes Ende des Kabels der wenigstens einen Bearbeitungseinheit zuzuführen; und
eine vierte Position, in der die Weiche außerhalb der Vorschubstrecke positioniert ist, derart, dass die Vorschubstrecke in dem Bereich, den die Weiche in den anderen Positionen einnimmt, einen Freiraum aufweist.

Der Erfinder hat erkannt, dass sich eine Steuerung, die eingerichtet ist, um die Weiche wenigstens in die vorgenannten vier Positionen zu stellen, in besonderer Weise eignet, insbesondere um auch einen Vollabzug herzustellen. Zur Herstellung eines Vollabzugs ist es von Vorteil, wenn das abisolierte Stück des Kabelmantels, das heißt der Abisolierrest, vollständig abgezogen und aus der Vorrichtung herausfallen kann. Dies lässt sich in besonders einfacher Weise erreichen, wenn die Weiche in der vierten Position derart positioniert wird, dass die Vorschubstrecke freigelegt ist bzw. dass die Weiche einen Freiraum schafft, der es ermöglicht, dass der Abisolierrest ausfallen kann. Nachdem die Weiche vorzugsweise eng benachbart zu der Schneideinrichtung angeordnet ist, kann der freigewordene Raum der Weiche genutzt werden, um das abisolierte Stück des Kabelmantels vollständig auszuwerfen.

Für eine derartige Weiterbildung der Erfindung bietet es sich an, dass die Weiche in Vorschubrichtung des Kabels vor der Schneideinrichtung angeordnet ist, das heißt, dass das sich in Vorschubrichtung bewegende Kabel zunächst die Weiche und erst dann die Schneideinrichtung erreicht. Dies hat den Vorteil, dass, wenn die Weiche außerhalb der Vorschubstrecke positioniert ist, ein Freiraum geschaffen wird, der es ermöglicht, ein hinteres Ende des Kabelstücks durch die Schneideinrichtung vollständig abzuisolieren.

Von Vorteil ist es, wenn die Weiche in der vierten Position oberhalb der Vorschubstrecke positioniert ist, wobei die Vorrichtung eingerichtet ist, um in der vierten Position einen Vollabzug an einem der Enden des Kabelstücks vorzunehmen, vorzugsweise am hinteren Ende des Kabelstücks, und wobei die Weiche nach Durchführung des Vollabzugs derart in die Vorschubstrecke zurückfahrbar ist, dass ein gegebenenfalls nicht vollständig von dem Ende des Kabelstücks abgetrennter Abisolierrest des Kabelstücks abgeschlagen wird.

Es kann bei einem Vollabzug gelegentlich vorkommen, dass ein abisoliertes Stück des Kabelmantels noch an dem Kabelstück anhaftet. Durch ein entsprechendes Zurückfahren der Weiche in die Förderstrecke kann dann gegebenenfalls das abisolierte Stück des Kabelmantels abgeschlagen werden.

Ein derartiges Abschlagen lässt sich grundsätzlich auch erreichen, wenn die Weiche in einer beliebigen anderen Position relativ zu der Vorschubstrecke positioniert wird. Es hat sich jedoch gezeigt, dass insbesondere eine Position oberhalb der Vorschubstrecke besonders einfach erreichbar ist, da in dieser Position zumeist ausreichend Platz besteht.

In einer Ausgestaltung der Erfindung kann ferner vorgesehen sein, dass entlang der Vorschubstrecke zu der Weiche versetzt wenigstens eine zweite Weiche vorgesehen ist, die in der Vorschubstrecke positionierbar ist um das Kabelstück von der Vorschubstrecke auszulenken.

Die Ausbildung einer zweiten Weiche kann insbesondere von Vorteil sein, um eine weitere Bearbeitungseinheit einzusetzen, die beispielsweise ausgebildet ist, um einen weiteren Bearbeitungsvorgang durchzuführen oder ausgelegt ist, um Kabelstücke mit einem anderen Durchmesser als die erste Bearbeitungseinheit zu bearbeiten. Dabei ist es möglich, dass die Weiche, wenn die zweite Bearbeitungseinheit nicht benötigt wird, derart geschaltet wird, dass das Kabelstück nicht ausgelenkt wird. Ferner ist es möglich, dass, wenn die erste Bearbeitungseinheit bzw. die erste Weiche nicht benötigt wird, diese derart geschaltet wird, dass das Kabelstück durch die Weiche lediglich in Vorschubrichtung durchtransportiert wird. Möglich ist jedoch auch, dass beide Weichen verwendet werden, um ein Kabelstück zu bearbeiten. Dadurch können auch Taktzeiten reduziert werden. Es kann eine beliebige Anzahl von Weichen vorgesehen sein. Der zweiten oder den weiteren Weichen kann gegebenenfalls auch jeweils eine eigene Vorschubeinrichtung zugeordnet sein. Es ist jedoch auch möglich, insbesondere eine Vorschubeinrichtung, die sich zwischen zwei Weichen befindet, für beide Weichen zu verwenden. Die beschriebene Ausgestaltung der Weiche, insbesondere der Verlauf der Führungen in der Weiche mit einem ersten und einem zweiten Durchmesser, stellt eine unabhängige zweite Erfindung dar, die sich auch unabhängig davon realisieren lässt, ob ein Bandförderpaar oder ein Rollenpaar mit einer spezifischen Kabelführung eingesetzt wird. Die Anmelderin behält sich ausdrücklich die Einreichung einer Teilanmeldung diesbezüglich vor. Beansprucht wird diesbezüglich eine Vorrichtung zur Bearbeitung von Kabeln, mit einer Vorschubeinrichtung, um das Kabel entlang einer Vorschubstrecke zu transportieren und zu positionieren, einer Schneideinrichtung zum Abschneiden eines Kabelstücks von dem Kabel derart, dass das Kabel zwei Enden aufweist, wenigstens einer Bearbeitungseinheit zum Bearbeiten wenigstens eines Endes des Kabels, einer Weiche mit einer Mehrzahl von Führungen, und mit einer Steuerung, um die Weiche in der Vorschubstrecke derart zu positionieren, dass das Kabelstück in eine der Führungen einfahrbar ist, wobei wenigstens eine Führung ausgebildet ist, um das Kabelstück von der Vorschubstrecke auszulenken, um ein Ende des Kabelstücks der wenigstens einen Bearbeitungseinheit zuzuführen, wobei die Führung, um das Kabelstück von der Vorschubstrecke auszulenken, einen Eingang, einen umfangsseitig geschlossenen Führungskanal und einen Ausgang aufweist, wobei sich der Durchmesser des Führungskanals zwischen dem Eingang und dem Ausgang verjüngt.

An diesen Anspruch der zweiten Erfindung können sich alle weiteren Ansprüche und Merkmale, die vorstehend oder nachfolgend erläutert wurden bzw. werden, anschließen.

Die Figuren zeigen jeweils bevorzugte Ausführungsbeispiele, in denen einzelne Merkmale der vorliegenden Erfindung in Kombination miteinander dargestellt sind. Die Merkmale eines Ausführungsbeispiels sind auch losgelöst von den anderen Merkmalen des gleichen Ausführungsbeispiels umsetzbar und können dementsprechend von einem Fachmann zu weiteren sinnvollen Kombinationen mit Merkmalen anderer Ausführungsbeispiele verbunden werden.

Nachfolgend werden Ausführungsbeispiele der Erfindung prinzipmäßig anhand der Figuren dargestellt. Es zeigt:
- Figur 1: eine perspektivische Ansicht auf die erfindungsgemäße Vorrichtung, wobei die Vorschubeinrichtung zwei Bandförderpaare aufweist;
- Figur 2: eine Vorderansicht auf die in Fig. 1 dargestellte Vorrichtung;

- Figur 3: eine Darstellung nach Fig. 2 mit einer Bearbeitungseinheit zum Bearbeiten wenigstens eines Endes des Kabels;
- Figur 4: eine perspektivische Ansicht auf die Darstellung nach Fig. 3;
- Figur 5: eine Vorderansicht auf die erfindungsgemäße Vorrichtung, wobei die Vorschubeinrichtung zwei Rollenpaare aufweist;
- Figur 6: eine Vorderansicht auf die erfindungsgemäße Vorrichtung, wobei die Vorschubeinrichtung vier Rollenpaare aufweist;
- Figur 7: eine vergrößerte Darstellung auf eine erfindungsgemäße Weiche mit drei Führungen und mit einer Hubeinrichtung, um die Weiche zu positionieren;
- Figur 8: eine Ansicht auf eine Oberseite einer Platte der Weiche;
- Figur 9: eine Ansicht auf eine Unterseite der Platte nach Fig. 8;
- Figur 10: eine perspektivische Ansicht auf die Oberseite der Platte nach Fig. 8;
- Figur 11: eine weitere perspektivische Ansicht auf die Oberseite der Platte nach Fig. 8;
- Figur 12: eine Seitenansicht auf die in Fig. 8 dargestellte Platte aus Pfeilrichtung XII, mit einer Darstellung der Ausgänge zweier Führungen;
- Figur 13: eine Seitenansicht auf die in Fig. 8 dargestellte Platte aus Pfeilrichtung XIII, mit einer Darstellung eines Eingangs einer Führung;
- Figur 14: eine Seitenansicht auf die in Fig. 8 dargestellte Platte aus Pfeilrichtung XIV, mit einer Darstellung eines Eingangs einer Führung;
- Figur 15: einen Schnitt durch die in Fig. 8 dargestellte Platte nach der Linie XV-XV;
- Figur 16: eine prinzipmäßige Darstellung einer Weiche mit fünf Führungen und eine Darstellung von zwei Bearbeitungseinheiten;

- Figur 17: eine prinzipmäßige Darstellung der erfindungsgemäßen Vorrichtung mit zwei Weichen und mehreren Bearbeitungseinheiten;
- Figur 18: eine Seitenansicht auf eine erfindungsgemäße Kabelführung für ein Rollenpaar; und
- Figur 19: eine perspektivische Ansicht auf eine erfindungsgemäße Kabelführung mit einer Darstellung der beiden Aussparungen zum Eingriff für jeweils eine Rolle eines Rollenpaars.

Vorrichtungen zum Bearbeiten von Kabeln sind aus dem allgemeinen Stand der Technik, beispielsweise dem Abläng- und Abisolierautomat Metzner AM 2000 der Anmelderin sowie auch aus der EP 0 860 044 B1 und der US 5,445,051 A1 bekannt. Ferner ist auch das Grundprinzip der erfindungsgemäßen Vorrichtung, bei der das Kabelstück aus seinem Vorschubweg ausgelenkt wird, um das Kabelstück einer separaten Bearbeitungseinheit zuzuführen, bekannt, wozu auf die DE 196 05 498 C1 der Anmelderin verwiesen wird.

Nachfolgend werden daher nur die für die Erfindung wesentlichen Merkmale näher dargestellt.

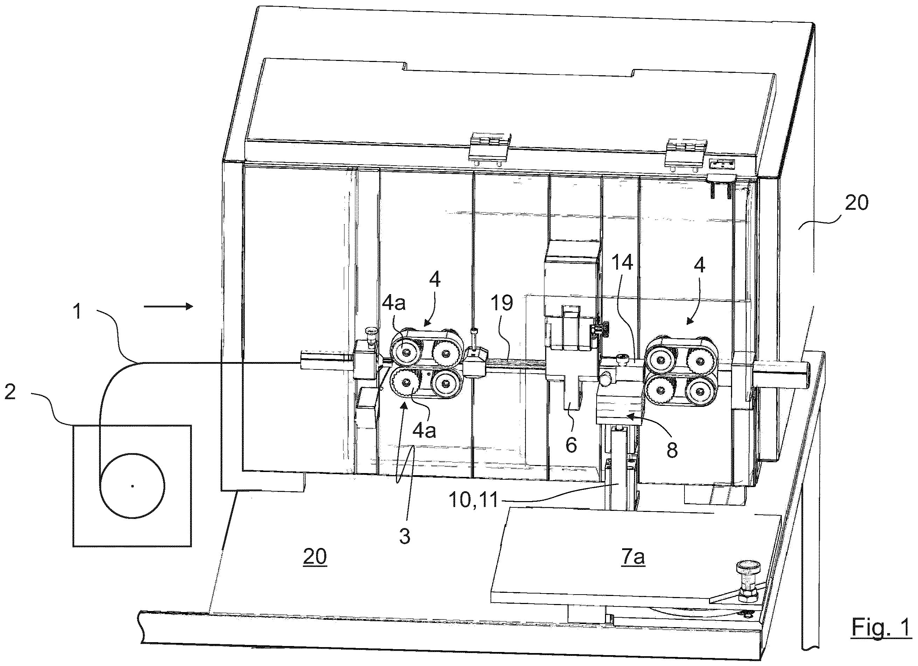

Die Figur 1 zeigt eine erfindungsgemäße Vorrichtung zur Bearbeitung von Kabeln. Ein zu bearbeitendes Kabel 1 kann beispielsweise auf einer Kabelrolle 2 aufgewickelt sein und der Vorrichtung zugeführt werden, wie dies prinzipmäßig in der Figur 1 dargestellt ist.

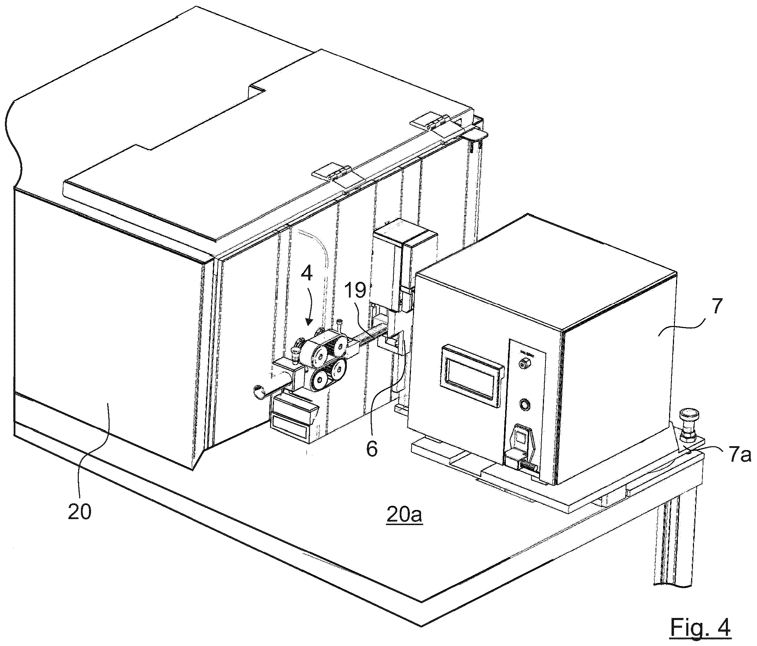

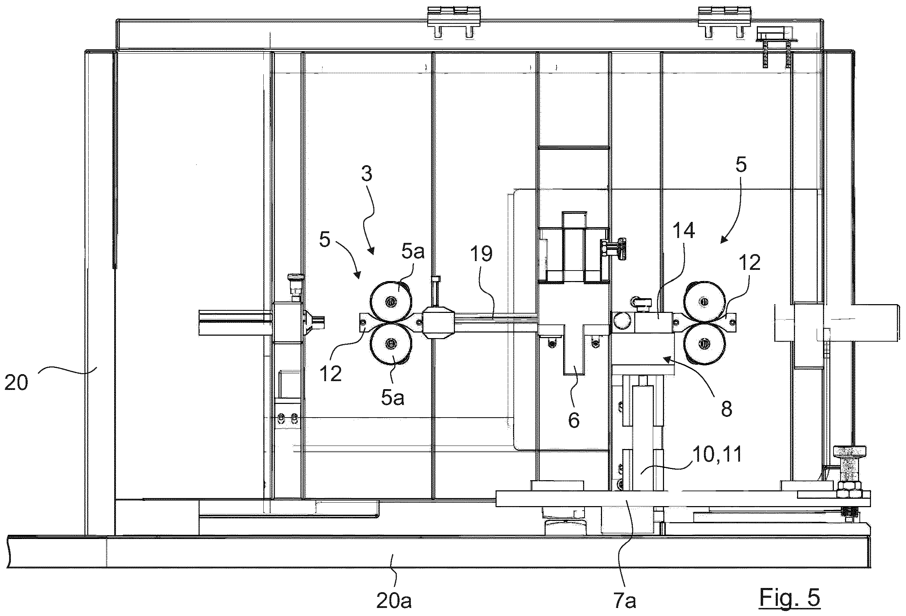

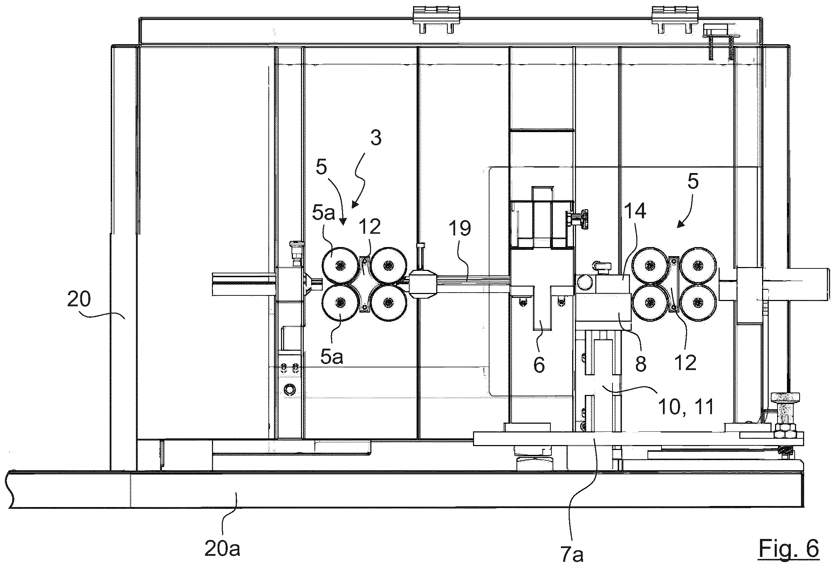

Die erfindungsgemäße Vorrichtung weist eine Vorschubeinrichtung 3 auf, welche gemäß der Ausführungsform nach den Figuren 1 bis 4 zwei Bandförderpaare 4 umfasst. In der Ausführungsform gemäß Figur 5 sind anstelle der Bandförderpaare 4 zwei Rollenpaare 5 und in der Ausführungsform nach Figur 6 vier Rollenpaare 5, wobei jeweils zwei Rollenpaare 5 zu einem Doppel-Rollenpaar zusammengesetzt sind, vorgesehen.

Das in den Figuren 1 bis 4 dargestellte Bandförderpaar 4 weist jeweils zwei Bandförderer 4a auf. Die in den Figuren 5 und 6 dargestellten Rollenpaare 5 weisen jeweils zwei Rollen 5a auf.

Die Bandförderpaare 4 bzw. die Rollenpaare 5 dienen zum Vorschub des Kabels 1 entlang einer Vorschubstrecke, um das Kabel 1 in Vorschubrichtung, welche durch den Pfeil in Figur 1 symbolisiert ist, zu transportieren, wobei die Bandförderpaare 4 und die Rollenpaare 5 auch eingerichtet sind, um das Kabel 1 entgegen der Vorschubrichtung, wie nachfolgend noch näher dargestellt, zu transportieren.

Die Vorschubstrecke erstreckt sich von einem Eingang der Vorrichtung, an der in Figur 1 die Kabelrolle 2 symbolisch dargestellt ist, in linearer Richtung durch die Vorrichtung, d. h. in den Ausführungsbeispielen gemäß den Figuren 1 bis 6 in Bildrichtung von links nach rechts durch die erfindungsgemäße Vorrichtung.

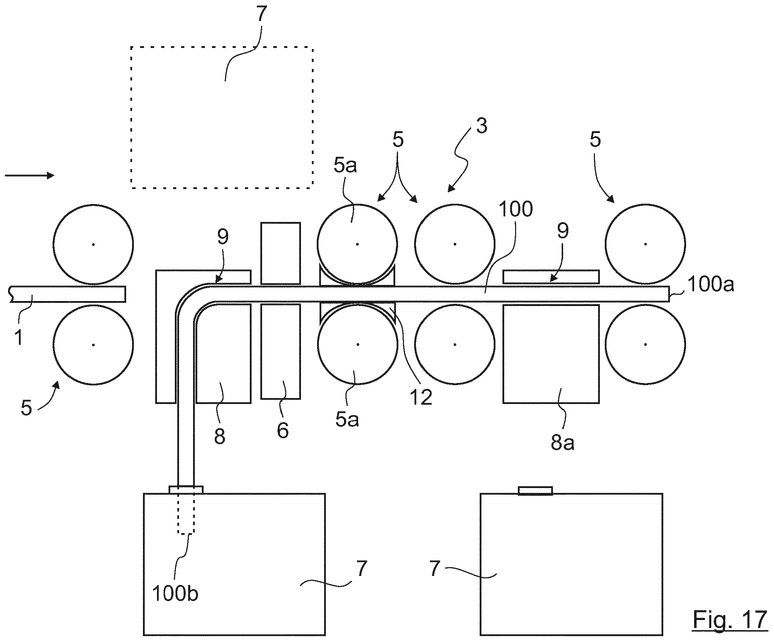

Die erfindungsgemäße Vorrichtung weist eine Schneideinrichtung 6 zum Abschneiden eines Kabelstücks 100 von dem Kabel 1 auf. Das Kabelstück 100 weist in bekannter Weise somit zwei Enden 100a, 100b auf, im Ausführungsbeispiel (siehe Figur 17) handelt es sich bei dem Ende 100a um das vordere Ende des Kabelstücks 100 und bei dem Ende 100b um das hintere Ende des Kabelstücks 100.

Das vordere Ende 100a ist das Ende des Kabelstücks 100, welches in Vorschubrichtung weiter vorne liegt, d. h. beispielsweise die Schneideinrichtung 6 zuerst erreicht, während das hintere Ende 100b des Kabelstücks 100 in Vorschubrichtung weiter hinten liegt.

In den Figuren 1 bis 6 ist das Kabelstück 100 aus Übersichtlichkeitsgründen nicht dargestellt, insbesondere auch, weil das grundsätzliche Funktionsprinzip der Vorrichtung insbesondere auch aus der DE 196 05 498 C1 grundsätzlich bekannt ist.

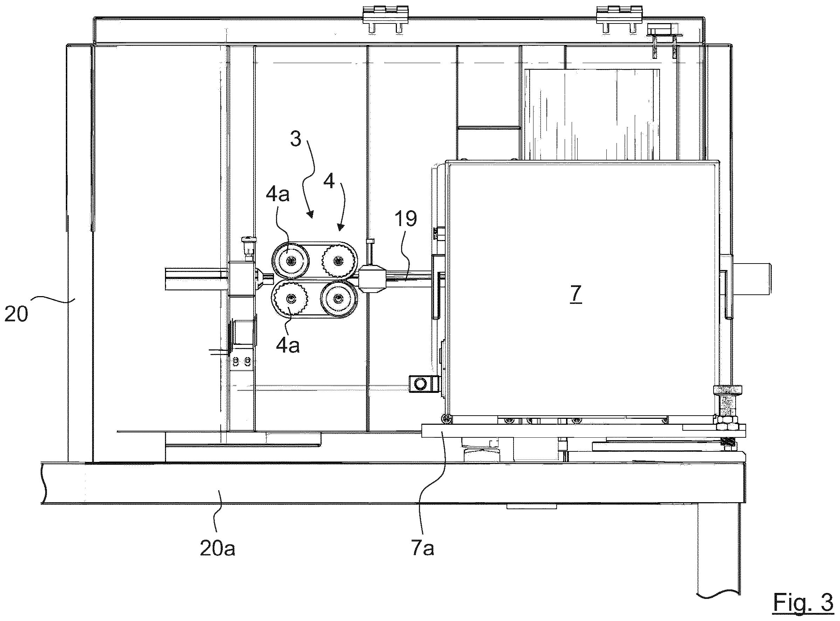

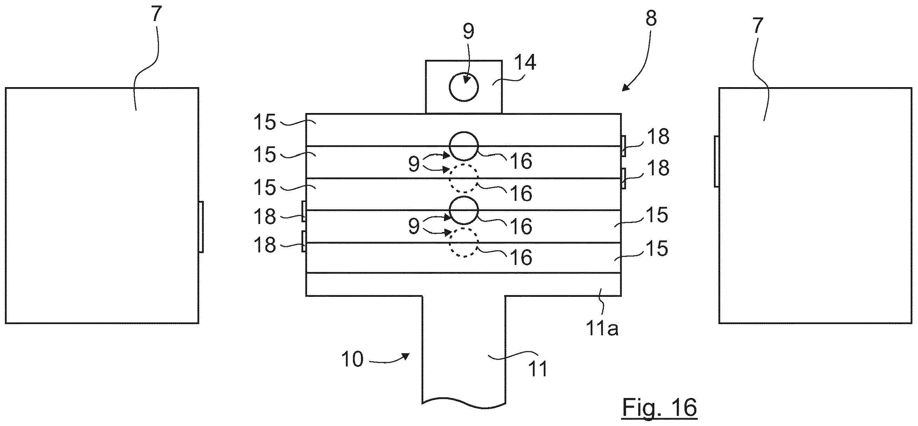

Die erfindungsgemäße Vorrichtung weist wenigstens eine Bearbeitungseinheit 7 zum Bearbeiten wenigstens eines Endes 100a, 100b des Kabelstücks 100 auf. Die Bearbeitungseinheit 7 ist prinzipmäßig in den Figuren 3, 4, 16 und 17 dargestellt. Die Bearbeitungseinheit 7 kann beispielsweise ausgebildet sein, um ein Ende 100a, 100b des Kabelstücks 100 abzuisolieren und/oder eine Aderendhülse an einem Ende zu befestigen, beispielsweise durch Crimpen. Die Bearbeitungseinheit 7 kann jedoch auch einen beliebigen anderen Bearbeitungsvorgang durchführen. Insofern, wie in Figur 16 und Figur 17 dargestellt, mehr als eine Bearbeitungseinheit 7 vorgesehen ist, kann vorgesehen sein, dass die Bearbeitungseinheiten 7 beispielsweise zur Bearbeitung von unterschiedlichen Kabeldurchmessern vorgesehen sind, so dass, wenn Kabel 1 mit unterschiedlichem Durchmessern bearbeitet werden sollen, ein Rüstaufwand entfällt bzw. reduziert wird. Es kann jedoch auch vorgesehen sein, dass die Bearbeitungseinheiten 7 unterschiedliche Bearbeitungsvorgänge durchführen, die gegebenenfalls auch optional sein können.

In den Figuren 1, 2, 5 und 6 ist die Bearbeitungseinheit 7 aus Übersichtlichkeitsgründen nicht dargestellt. Dargestellt ist an dieser Stelle jedoch eine Plattform 7a zur Aufnahme bzw. zur Befestigung der Bearbeitungseinheit 7.

Die erfindungsgemäße Vorrichtung weist ferner eine Weiche 8 mit einer Mehrzahl von Führungen 9 auf. Ferner ist eine Steuerung 10 vorgesehen, um die Weiche 8 in der Vorschubstrecke derart zu positionieren, dass das Kabelstück 100 in eine der Führungen 9 einfahren kann.

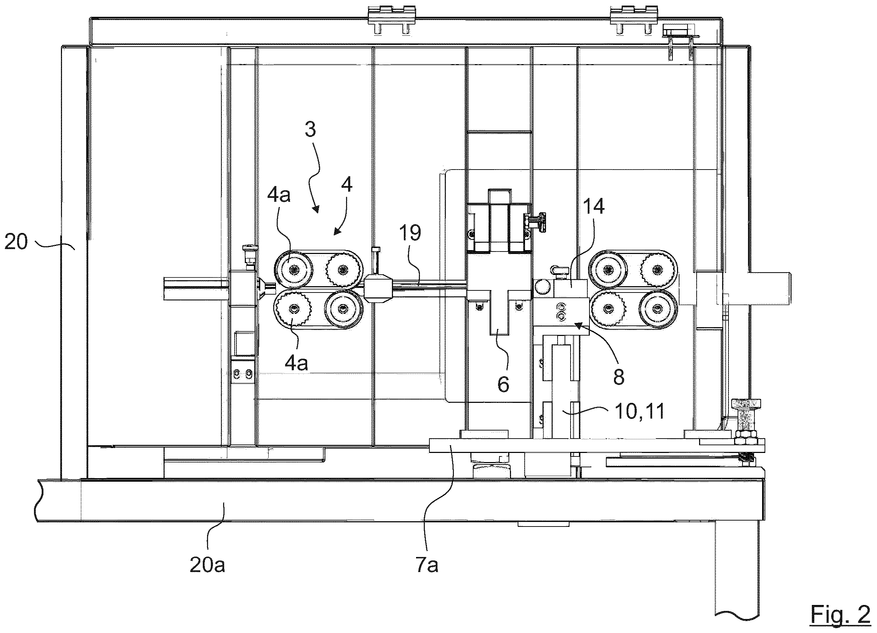

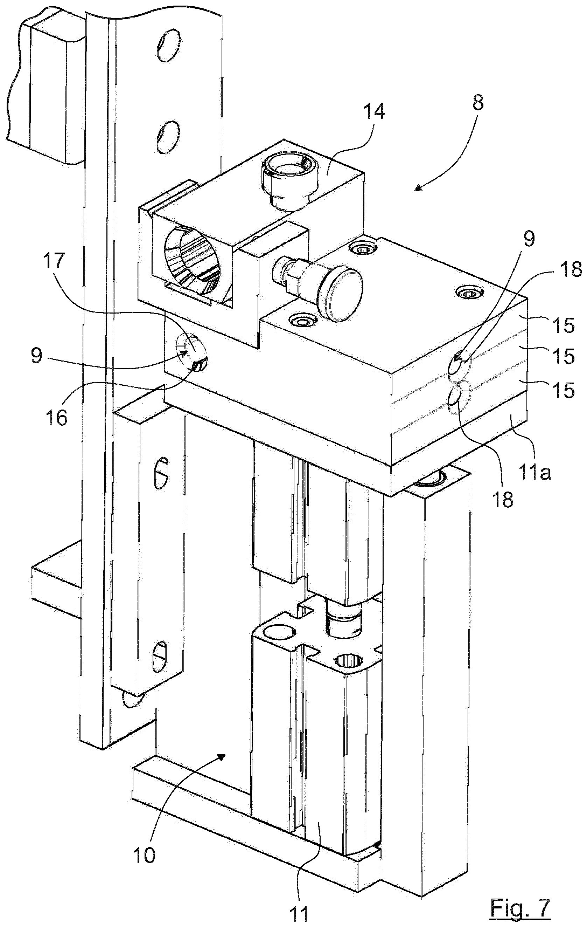

Die Steuerung 10 ist im Ausführungsbeispiel lediglich teilweise, nämlich durch die Darstellung einer Hubeinrichtung 11, die Teil der Steuerung 10 ist, symbolisiert. Hinsichtlich der Hubeinrichtung 11 wird insbesondere auf die Figur 7 verwiesen. Die Hubeinrichtung 11 ermöglicht es, die Weiche 8 in Linearrichtung zu bewegen, im Ausführungsbeispiel nach oben und nach unten, um die Führungen 9 entsprechend in der Vorschubstrecke zu positionieren. Selbstverständlich sind hier auch andere geeignete Bewegungsabläufe, insbesondere auch eine seitliche Bewegung, z. B. in die in Fig. 2 dargestellte Zeichnungsebene hinaus oder hinein, möglich.

Von Vorteil ist es, wenn die Steuerung 10 derart eingerichtet ist, dass die Verstellung prozesssicher und schnell erfolgen kann, damit kurze Taktzeiten realisierbar sind.

Erfindungsgemäß ist wenigstens eine Führung 9 ausgebildet, um das Kabelstück 100 von der Vorschubstrecke auszulenken, um ein Ende des Kabelstücks 100 der wenigstens einen Bearbeitungseinheit 7 zuzuführen. Dies ist in Figur 17 prinzipmäßig dargestellt.

Insbesondere wenn nur ein Ende 100a, 100b des Kabelstücks 100 bearbeitet werden soll, kann es ausreichend sein, wenn die erfindungsgemäße Vorrichtung über eine Führung 9 verfügt, um das Kabelstück 100 von der Vorschubstrecke auszulenken. Vorgesehen sein kann dabei eine weitere Führung 9, um das Kabelstück 100 entlang der Vorschubstrecke zu transportieren. Das heißt, grundsätzlich würden bereits zwei Führungen 9 ausreichen. Es ist jedoch zu bevorzugen, wenn die Weiche 8 wenigstens drei Führungen 9, vorzugsweise genau drei Führungen 9, wie in Figur 7 dargestellt, oder fünf Führungen 9, wie in Figur 16 dargestellt, aufweist.

Zum grundsätzlichen Funktionsprinzip der Weiche 8, wenn diese drei Führungen 9 aufweist, wird auf die DE 196 05 498 C1 verwiesen, insbesondere auf die dortigen Figuren 2 bis 5 und die zugehörige Beschreibung, die erläutert, wie das Kabelstück 100 durch Zustellung der entsprechenden Führungen 9 entlang der Vorschubstrecke transportiert oder aus der Vorschubstrecke ausgelenkt wird, um ein Ende 100a, 100b des Kabelstücks 100 einer Bearbeitungseinheit 7 zuzuführen, wie dies auch in Figur 17 prinzipmäßig anhand eines Endes 100b dargestellt ist.

Die Figur 17 zeigt eine spezifische Ausgestaltung mit zwei Weichen 8, 8a das Grundprinzip ist jedoch, wie dargestellt, dasselbe, wenn nur eine Weiche 8 eingesetzt wird.

Wie sich aus dem Ausführungsbeispiel nach den Figuren 1 bis 4 ergibt, weist die Vorschubeinrichtung 3 wenigstens ein motorisch angetriebenes Bandförderpaar 4 auf. Im Ausführungsbeispiel sind, wie bereits erwähnt, zwei motorisch angetriebene Bandförderpaare 4 vorgesehen, die ausgebildet sind, um das Kabelstück 100 bzw. das Kabel 1 zwischen jeweils zwei Bandförderern 4a eines Bandförderpaars 4 durchzuführen und dazwischen zu klemmen.

Die in den Figuren 1 bis 4 dargestellte Ausführungsform kann auch nur über ein Bandförderpaar 4 verfügen. Ferner ist es möglich, das dargestellte Bandförderpaar 4 auch mit anderen Fördereinrichtungen, beispielsweise auch einem Rollenpaar 5 oder mehreren Rollenpaaren 5 zu kombinieren.

Die beiden Ausführungsbeispiele nach den Figuren 5 und 6 zeigen eine Variante der erfindungsgemäßen Vorrichtung, bei der zwei bzw. vier motorisch angetriebene Rollenpaare 5 vorgesehen sind, wobei das Kabelstück 100 bzw. das Kabel 1 zwischen den Rollen 5a der Rollenpaare 5 durchführbar und durch diese in Vorschubrichtung und entgegen der Vorschubrichtung transportierbar ist. Auch bei den Ausführungsformen nach den Figuren 5 und 6 sind Abweichungen möglich, insbesondere die Verwendung von mehr oder weniger Rollenpaaren 5 und gegebenenfalls die Kombination mit anderen Vorschubeinrichtungen, unter anderem auch einem Bandförderpaar 4.

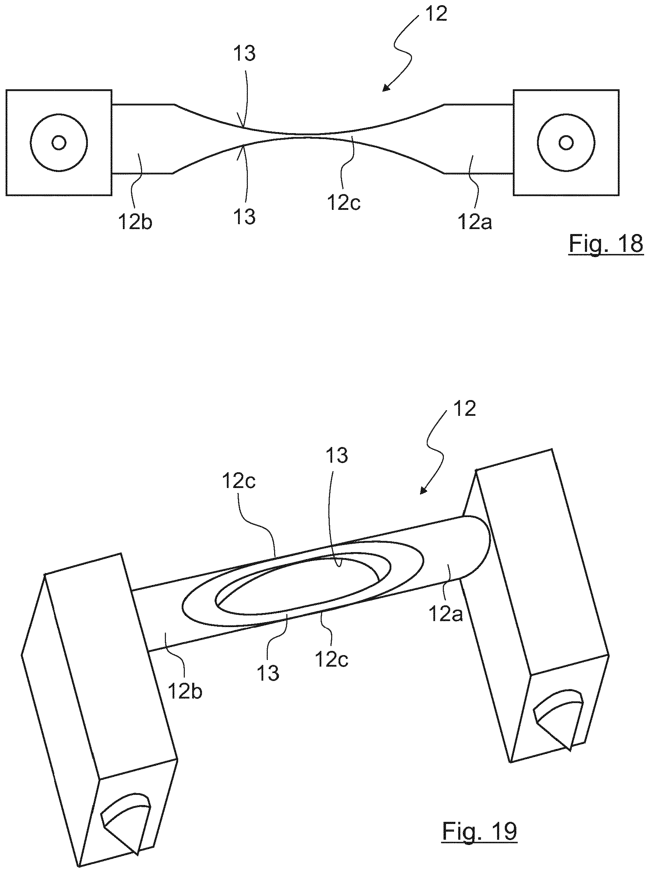

Bei den Ausführungsbeispielen gemäß der Figuren 5 und 6 ist zusätzlich zu wenigstens einem der Rollenpaare 5, vorzugsweise zusätzlich zu jedem Rollenpaar 5, eine Kabelführung 12 vorgesehen. Die Kabelführung 12 ist dabei in der Vorschubstrecke des Kabelstücks 100 zwischen den beiden Rollen 5a des Rollenpaars 5 positioniert. Die Kabelführung 12 weist dabei für beiden Rollen 5a jeweils eine, in den Figuren 18 und 19 näher dargestellte, Aussparung 13 auf, die derart gestaltet ist, dass die Rollen 5a in die Kabelführung 12 eingreifen können, um das Kabelstück 100 zu transportieren.

Die Aussparungen 13 in der Kabelführung 12 sind somit derart gestaltet, dass die Rollen 5a eines Rollenpaars 5 das Kabelstück 100 zum Zwecke des Transports zwischen sich einklemmen können.

Die Kabelführung 12 weist vorzugsweise eine rohrförmige Grundform auf, so wie dies in den Figuren 18 und 19 dargestellt ist. Eine entsprechende rohrförmige Grundform ist auch in der Figur 5 dargestellt. Die Figur 6 zeigt eine abweichende Ausbildung der Kabelführung 12, die ebenfalls Aussparungen 13 aufweist, um einen Eingriff von Rollen 5a der Rollenpaare 5 zu ermöglichen.

Die Kabelführung 12 kann, so wie dies in Figur 6 links dargestellt ist derart ausgestaltet sein, dass diese für zwei benachbart angeordnete Rollenpaare 5 bzw. für die dargestellten Doppel-Rollenpaare Verwendung finden kann. Möglich ist es dabei auch, dass ein in Vorschubrichtung vorne liegendes Rollenpaar 5, so wie in Figur 6 rechts dargestellt, nicht über eine Kabelführung 12 verfügt. Dies ist möglich, wenn gewährleistet werden kann, dass das Kabelstück 100 bereits vorher wieder einen im Wesentlichen linearen Verlauf erhalten hat, beispielsweise dadurch, dass dieses bereits ein Rollenpaar 5 mit einer Kabelführung 12 durchlaufen hat, bevor das vorne liegende Rollenpaar 5 ohne die Kabelführung 12 erreicht wird. Im Ausführungsbeispiel nach Figur 6 weist das zweite Rollenpaar 5 (von der rechten Seite der Zeichnungsebene betrachtet), welches das Kabelstück 100 erreicht, bevor das Kabelstück 100 das Rollenpaar 5 ohne die Kabelführung 12 erreicht, eine Kabelführung 12 auf, die das Kabelstück 100 wieder gerade richtet.

Es ist jedoch zu bevorzugen, wenn jedes Rollenpaar 5 über eine Kabelführung 12 verfügt, damit die Vorrichtung besonders prozesssicher ist.

Die Kabelführung 12 und die beiden Rollen 5a eines Rollenpaars 5 sind vorzugsweise derart angeordnet, dass die Rollen 5a die Aussparungen 13 derart verschließen, dass das Kabelstück 100 entlang der Aussparungen 13 von der Kabelführung 12 und den Rollen 5a umfangsseitig wenigstens annähernd vollständig geschlossen umfasst ist. Damit wird ein Ausweichen des Kabelstücks 100 in diesem Bereich vermieden. Selbstverständlich sind kleine Abstände zwischen den Rollen 5a und der jeweiligen Aussparung 13 vorgesehen, damit sich die Rollen 5a reibungsfrei drehen können.

Wie sich aus den Figuren 18 und 19 und auch aus der Figur 5 ergibt, sind die Aussparungen 13 in der Kabelführung 12 vorzugsweise derart eingebracht, dass zwei gegenüberliegend angeordnete seitliche Stege 12c in der Kabelführung 12 verbleiben, welche ein vorderes Ende 12a der Kabelführung mit einem hinteren Ende 12b der Kabelführung 12 verbinden und welche geeignet sind, das Kabelstück 100 in der Kabelführung 12 im Bereich der Aussparungen 13 gemeinsam mit den Rollen 5a zu führen.

Die Aussparungen 13 weisen in Längsrichtung betrachtet jeweils die Form eines Kreissegments auf, wobei der Kreisbogen des Kreissegments, insbesondere in dem Bereich, in dem die Rollen 5a in die Aussparung 13 eingreifen, um das Kabelstück 100 zu transportieren, im Wesentlichen an den Radius der jeweiligen Rolle 5a angepasst ist.

In nicht näher dargestellter Weise kann vorgesehen sein, dass der Abstand zwischen den Rollen 5a eines Rollenpaars 5 veränderbar ist und die Kabelführung 12 zur Anpassung an den veränderten Abstand zwischen den Rollen 5a austauschbar ist. Die Vorrichtung kann somit in einfacher Weise an Kabelstück 100 mit unterschiedlichem Durchmesser angepasst werden. Alternativ dazu kann auch vorgesehen sein, dass der Abstand zwischen zwei Bandförderern 4a eines Bandförderpaars 4 veränderbar ist.

Wie sich aus den Figuren 1 bis 6 und der Figur 17 ergibt, ist im Ausführungsbeispiel vorgesehen, dass wenigstens ein Bandförderpaar 4 bzw. ein Rollenpaar 5 in Vorschubrichtung vor der Weiche 8 und ein Bandförderpaar 4 bzw. ein Rollenpaar 5 in Vorschubrichtung nach der Weiche 8 vorgesehen ist.

Daraus ergibt sich ein optimaler Transport des Kabelstücks 100 durch die Vorrichtung. Erfindungsgemäß kann dabei insbesondere vorgesehen sein, dass das in Vorschubrichtung nach der Weiche 8 angeordnete Rollenpaar 5 bzw. das Bandförderpaar 4 eng benachbart an der Weiche 8 positioniert ist, wobei gegebenenfalls zwischen der Weiche 8 und dem Rollenpaar 5 bzw. dem Bandförderpaar 4 noch die Schneideinrichtung 6 positioniert ist, wobei auch in diesem Fall eine eng benachbarte Positionierung von Vorteil ist. Es ist grundsätzlich von Vorteil, wenn die Schneideinrichtung 6, die Weiche 8 und das in Vorschubrichtung nach der Weiche 8 angeordnete Bandförderpaar 4 bzw. das Rollenpaar 5 eng benachbart zueinander angeordnet sind, damit auch möglichst kurze Kabelstücke 100 bearbeitet werden können.

Wie sich aus Figur 7 ergibt, kann die Weiche 8 vorzugsweise drei Führungen 9 aufweisen, wobei eine der Führungen 9 ausgebildet ist, um das Kabelstück 100 entlang der Vorschubstrecke zu führen und die anderen beiden Führungen 9 ausgebildet sind, um das Kabelstück 100 von der Vorschubstrecke auszulenken, um ein Ende 100a, 100b des Kabelstücks 100 wenigstens einer Bearbeitungseinheit 7 zuzuführen. Hinsichtlich des Grundprinzips wird wiederum auf die Figuren 2 bis 5 der DE 196 05 498 C1 verwiesen. Im Ausführungsbeispiel nach der Figur 7 ist vorgesehen, dass die Führung 9, welches das Kabelstück 100 entlang der Vorschubstrecke führt, als Führungshülse bzw. als Quader 14 mit einer Längsbohrung, welche die Führung 9 bildet, ausgestaltet ist.

Ferner ist, wie sich aus Figur 7 ergibt, vorgesehen, dass die Weiche 8 eine Mehrzahl von Platten 15, die zu einem Block zusammengesetzt sind, aufweist.

Die Weiche 8 kann auch nur durch Platten 15 gebildet werden. Im Ausführungsbeispiel ist jedoch eine Ausbildung der Weiche 8 aus dem Quader 14 und den Platten 15 vorgesehen.

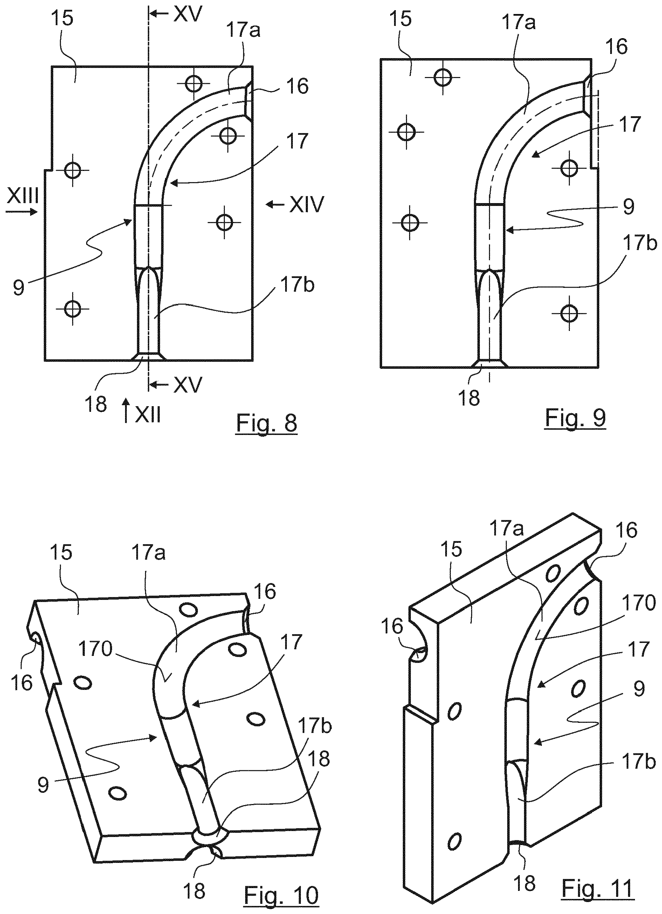

Wie sich aus Figur 7 ergibt, weisen die Führungen 9, um das Kabelstück 100 von der Vorschubstrecke auszulenken, einen Eingang 16, einen umfangsseitig geschlossenen Führungskanal 17 und eine Ausgang 18 auf. Dargestellt ist in Figur 7 ein Eingang 16 einer Führung 9, um das Kabelstück 100 von der Vorschubstrecke auszulenken. Der Eingang 16 dient dabei dazu, ein, in Bildrichtung von links kommendes Kabelstück 100, welches in Vorschubrichtung transportiert wird, derart auszulenken, dass dieses die Weiche 8 durch einen Ausgang 18, in Figur 7 den unten liegenden Ausgang 18, in Richtung auf eine Bearbeitungseinheit 7 verlässt. Der in Figur 7 oben dargestellte Ausgang 18 stellt einen Ausgang einer Führung 9 dar, die das Kabelstück 100 durchläuft, wenn das Kabelstück 100 entgegen der Vorschubrichtung, d. h. in der bildlichen Darstellung der Figur 7 von rechts nach links, durchläuft. Der dazugehörige Eingang befindet sich auf der von dem dargestellten Eingang 16 abgewandten Seite des durch die Platten 15 gebildeten Blocks und ist daher nicht dargestellt. Das Prinzip ergibt sich aus der DE 196 05 498 C1 sowie der Figuren 8 bis 15 der vorliegenden Erfindung.

Im Ausführungsbeispiel ist - optional - vorgesehen, dass sich der Durchmesser des Führungskanals 17 zwischen dem Eingang 16 und dem Ausgang 18 verjüngt.

Ferner ist vorgesehen, dass die Eingänge 16 und die Ausgänge 18 trichterförmig bzw. angefast bzw. angeschrägt ausgebildet sind.

Die Figur 7 zeigt, wie bereits erwähnt, eine Hubeinrichtung 11 als Teil der Steuerung 10. Die Hubeinrichtung 11 weist dabei eine Befestigungsplatte 11a auf, die zur Aufnahme bzw. zur Anordnung der Weiche 8 dient.

Wie in den Figuren 8 bis 11 und der Figur 15 näher dargestellt ist, weist der Führungskanal 17 einen ersten, dem Eingang 16 zugewandten Abschnitt 17a, der im Ausführungsbeispiel vorzugsweise kreisförmig verläuft und einen ersten Durchmesser aufweist, auf. An den ersten Abschnitt 17a schließt sich ein zweiter, dem Ausgang 18 zugewandter Abschnitt 17b an, welcher vorzugsweise im Wesentlichen linear verläuft, wobei sich der zweite Abschnitt 17b von dem ersten Durchmesser in Richtung auf den Ausgang 18 auf einen zweiten Durchmesser verjüngt. Der erste Durchmesser ist vorzugsweise mindestens 5 % größer, vorzugsweise mindestens 10 % größer, besonders bevorzugt mindestens 20 % und ganz besonders bevorzugt 25 % größer als der erste Durchmesser.

Wie sich aus einer Zusammenschau der Figuren 7 bis 15 ergibt, sind die Führungen 9, um das Kabelstück 100 von der Vorschubstrecke auszulenken, jeweils durch zwei zusammengesetzte Platten 15 gebildet, wobei jede Platte 15 eine Führungskontur 170 in der Art einer Führungsrinne aufweist, und zwei Führungskonturen 170 zusammengesetzt eine Führung 9 bzw. einen Führungskanal 17 bilden. Die Führungskontur 170 weist, im Querschnitt betrachtet, einen Kreissektor auf, der der Hälfte der Kreisfläche der Führung 9 entspricht, d. h. die Führungskonturen 170 bilden jeweils eine halbe Führung aus.

Die Figur 8 zeigt eine Ansicht auf die Oberseite einer Platte 15, bei der es sich im Ausführungsbeispiel nach der Figur 7 um die mittlere der drei Platten 15 handelt. Dargestellt ist in Figur 8 der Verlauf einer Führung 9 mit einer Führungskontur 170, die einen ersten Abschnitt 17a und einen zweiten Abschnitt 17b aufweist. Der Ausgang 18 ist dabei einer in dieser Figur nicht dargestellten Bearbeitungseinheit 7 zugewandt. Bei dem Eingang 16 handelt es sich um den Eingang 16, der in der Figur 7 nicht dargestellt ist und sich an der Rückseite des in Figur 7 dargestellten Blocks der Weiche 8 befindet. Das heißt, der Eingang 16 dient zur Aufnahme bzw. zur Umlenkung eines hinteren Endes 100a eines Kabelstücks 100, welches entgegen der Vorschubrichtung bewegt wird, um dieses der Bearbeitungseinheit 7 zuzuführen.

Die Figur 9 zeigt eine Unterseite der in Figur 8 dargestellten Platte 15 mit einer Führung 9, einem Ausgang 18 und einem Eingang 16. Bei dem Eingang 16 handelt es sich um den Eingang 16, der in Figur 7 dargestellt ist. Bei dem Ausgang 18 handelt es sich um den in der Figur 7 dargestellten unteren Ausgang. Die beiden Ausgänge 18, so wie diese in Figur 7 dargestellt sind, sind, insbesondere aufgrund der Ausbildung in derselben Platte 15, eng benachbart angeordnet, so dass Kabelstücke 100, die aus den Ausgängen 18 ausgeführt werden, der gleichen Bearbeitungseinheit 7 zugeführt werden können, so wie dies analog in der Figur 16 dargestellt ist.

Die Figuren 10 und 11 zeigen zur weiteren Verdeutlichung perspektivische Darstellungen der Oberseite der Platte 15, aus denen sich auch in einer Zusammenschau mit der Figur 8 - die Figur 9 ist hierzu analog - ergibt, dass der Führungskanal 17 abweichend gestaltete Abschnitte 17a, 17b aufweist, sowohl hinsichtlich deren Verlauf als auch hinsichtlich deren Durchmesser, wie bereits beschrieben.

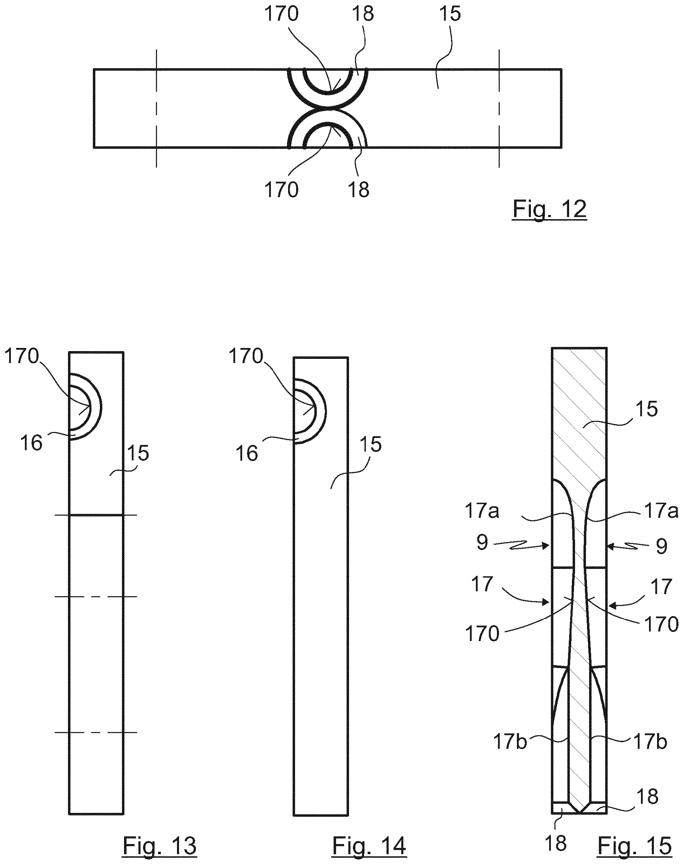

Die Figur 12 zeigt eine Ansicht auf eine Stirnseite der Platte 15 mit den Ausgängen 18, die beide angefast sind. Die Ausgänge 18 sind dabei einer hier nicht dargestellten Bearbeitungseinheit 7 zugewandt.

Die Figur 13 zeigt eine weitere Stirnseite der Platte 15 mit dem Eingang 16. Es handelt sich dabei um den Eingang 16, der in Figur 7 dargestellt ist.

Die Figur 14 zeigt eine weitere Seitenansicht der Platte 15 mit dem Eingang 16, der in Figur 7 nicht dargestellt ist.

Die Figur 15 zeigt einen Schnitt durch die in Figur 8 dargestellte Platte 15 anhand der Linie XV-XV. Aus dem Schnitt ergibt sich ferner auch, dass sich der Führungskanal 17 in Richtung auf den Ausgang 18 verjüngt.

Auf die in den Figuren 8 bis 15 dargestellte (mittige) Platte 15, die an ihren gegenüberliegenden Hauptflächen jeweils eine Führungskontur 170 aufweist, wird jeweils eine weitere Platte 15 angesetzt, welche eine jeweils korrespondierende Führungskontur 170 aufweist. Die drei Platten bilden somit einen Block, so wie in Figur 17 dargestellt, mit zwei vollständig geschlossenen Führungen 9 aus. Wie ebenfalls in der Figur 7 dargestellt, sind dabei die Ausgänge 18 der Führungen 9 in dem Block in derselben Seitenfläche, vorzugsweise übereinander, angeordnet, während sich die Eingänge 16 der Führungen 9 an gegenüberliegenden Seitenflächen des Blocks befinden.

Im Ausführungsbeispiel ist zumindest der Teil der Weiche 8, der die Führungen 9 ausbildet, aus einem reibungsoptimierten Kunststoff hergestellt. Im Ausführungsbeispiel ist vorgesehen, dass die Platten 15 der Weiche 8 aus einem reibungsoptimierten Kunststoff, vorzugsweise einem Kunststoff aus Graphit, besonders bevorzugt einem Polyethylen und ganz besonders bevorzugt einem UHMW-Polyethylen, vorzugsweise versetzt mit einem Schmiermittel, ausgebildet sind.

Im Ausführungsbeispiel kann vorgesehen sein, dass die Weiche 8 in Vorschubrichtung des Kabels 1 vor oder nach der Schneideinrichtung 6 angeordnet ist. In den Ausführungsbeispielen gemäß den Figuren 1 bis 6 befindet sich die Weiche 8 in Vorschubrichtung des Kabels 1 nach der Schneideinrichtung 6. Die Weiche 8 ist dabei zwischen der Schneideinrichtung 6 und einem Bandförderpaar 4 oder einem Rollenpaar 5 angeordnet.

Im Ausführungsbeispiel nach Figur 17 ist vorgesehen, dass sich die (erste) Weiche 8 in Vorschubrichtung vor der Schneideinrichtung 6 befindet.

Die Figur 16 zeigt eine zu Figur 7 alternative Ausführungsform. Die in Figur 16 dargestellte Weiche 8 weist fünf Führungen 9 auf, wobei eine Führung 9 vorgesehen ist, um das Kabelstück 100 entlang der Vorschubstrecke zu führen, und die anderen Führungen 9 ausgebildet sind, um das Kabelstück 100 aus der Vorschubstrecke auszulenken, um eine Ende 100a, 100b des Kabelstücks 100 wenigstens einer Bearbeitungseinheit 7 zuzuführen. Die Führung 9, um das Kabelstück 100 entlang der Vorschubstrecke zu führen, kann, wie in Figur 7 perspektivisch dargestellt, wiederum als Quader 14, alternativ jedoch auch als Platte 15 oder anderweitig als Führungshülse ausgebildet sein.

Die Weiche 8 gemäß Fig. 16 weist zwei Führungen 9 auf, um ein vorderes Ende 100a des Kabelstücks 100 umzulenken, und zwei Führungen 9, um ein hinteres Ende 100b des Kabelstücks 100 umzulenken. Dabei ist vorgesehen, dass die Führungen 9, um das vordere Ende 100a des Kabelstücks 100 umzulenken, derart ausgebildet ist, dass eine Führung 9 eine Umlenkung in Bildrichtung nach links und eine Führung 9 eine Umlenkung in Bildrichtung nach rechts verursacht, so dass das vordere Ende 100a zwei unterschiedlichen Bearbeitungseinheiten 7, so wie in Figur 16 dargestellt, zugeführt werden kann. Die Führungen 9, um das hintere Ende 100b des Kabelstücks 100 umzulenken, sind analog gestaltet.

Die in Figur 16 dargestellte Weiche 8 ermöglicht es somit, mit einer Weiche 8 und einer Steuerung 10 die Kabelenden 100a, 100b derart umzulenken, dass diese unterschiedlichen Bearbeitungseinheiten 7 zugeführt werden können. Es kann dabei vorgesehen sein, dass die Bearbeitungseinheiten 7 einander ergänzende oder alternative Bearbeitungsvorgänge durchführen. Gegebenenfalls kann auch vorgesehen sein, dass einer der Bearbeitungsvorgänge optional ist und nicht bei jedem Kabelstück 100 eingesetzt wird. Ferner kann vorgesehen sein, dass die Bearbeitungseinheiten 7 zur Bearbeitung von Kabelstücken 100 mit unterschiedlichen Durchmessern vorgesehen sind. Die Weiche 8 kann in ihrer Funktion grundsätzlich einer Weiche mit nur drei Führungen entsprechen. Die für den Betrieb der Vorrichtung notwendigen Führungen können gegebenenfalls zunächst entsprechend des Durchmessers des Kabelstücks ausgewählt werden, wobei die in dem Quader 14 ausgebildete Führung 9 für alle Kabeldurchmesser eingesetzt werden kann. Das heißt vorliegend, dass die Enden 100a, 100b eines Kabelstücks 100 mit einem spezifischen Durchmesser in diesem Fall nur einer Bearbeitungseinheit 7, beispielsweise der rechten Bearbeitungseinheit 7, zugeführt werden. Dazu wird die Weiche 8 derart gestellt, dass die oberen beiden Führungen 9 in den Platten 15 entsprechend in die Vorschubstrecke eingebracht bzw. dort positioniert werden. Insofern vorgesehen ist, dass bei einem Kabel 1, welches z. B. einen dickeren Durchmesser aufweist, die Enden 100a, 100b der in Bildrichtung dargestellten linken Bearbeitungseinheit 7 zugeführt werden sollen, wird die Weiche 8 derart gesteuert, dass die beiden untersten Führungen 9 bzw. deren Eingänge 16 entsprechend in die Vorschubstrecke eingebracht werden, wenn das Kabelstück 100 ausgelenkt werden soll.

Im Ausführungsbeispiel ist vorgesehen, dass die Steuerung 10 der in Figur 7 dargestellten Weiche 8 eingerichtet ist, um die Weiche 8 wenigstens in die nachfolgenden vier Positionen, vorzugsweise genau in die nachfolgenden vier Positionen, zu stellen. Vorgesehen ist eine erste Position, um das Kabelstück 100 unausgelenkt entlang der Vorschubstrecke in und entgegen der Vorschubrichtung zu transportieren. Ferner ist eine zweite Position vorgesehen, um das in Vorschubrichtung transportierte Kabelstück 100 von der Vorschubstrecke auszulenken, um ein in Vorschubrichtung vorne liegendes Ende 100a des Kabelstücks 100 der wenigstens einen Bearbeitungseinheit 7 zuzuführen. Vorgesehen ist ferner eine dritte Position, um das entgegen der Vorschubrichtung transportierte Kabelstück 100 von der Vorschubstrecke auszulenken, um eine in Vorschubrichtung hinten liegendes Ende 100b des Kabelstücks 100 der wenigstens einen Bearbeitungseinheit 7 zuzuführen. Ferner ist eine vierte Position vorgesehen, in der die Weiche 8 außerhalb der Vorschubstrecke positioniert ist, derart, dass die Vorschubstrecke in dem Bereich, den die Weiche 8 in den anderen Positionen einnimmt, einen (ungeführten) Freiraum aufweist.

Entsprechend kann die Weiche 8 gemäß der Figur 16 derart gesteuert werden, dass diese sechs Positionen einnehmen kann, wobei fünf Positionen derart gewählt sind, dass das Kabelstück 100 in die dargestellten Führungen 9 einführbar ist, während eine sechste Position vorgesehen ist, um die Weiche 8 derart zu positionieren, dass die Vorschubstrecke einen Freiraum aufweist.

Die Position, in der die Vorschubstrecke einen Freiraum aufweist, eignet sich besonders, um einen Vollabzug herzustellen.

Die in den Ausführungsbeispielen dargestellten erfindungsgemäßen Vorrichtungen sind vorzugsweise derart ausgebildet, dass diese einen Teilabzug am vorderen und/oder am hinteren Ende 100a, 100b des Kabelstücks 100 durchführen können. Ferner sind die Vorrichtungen vorzugsweise derart eingerichtet, dass, zumindest am in Vorschubrichtung hinteren Ende 100b des Kabelstücks 100 ein Vollabzug durchgeführt werden kann.

Das Prinzip um mit einer Schneideinrichtung 6 einen Vollabzug herzustellen ist an sich bekannt, wie bereits erläutert, wozu auch auf die EP 0 860 044 B1, insbesondere die dortigen Figuren 5a und 5b, sowie die US 5,445,051 A1 verwiesen wird. Um einen Vollabzug zu ermöglichen, wird vor und/oder hinter der Schneideinrichtung 6 in der Vorschubstrecke ein Freiraum geschaffen, damit ein abisoliertes Stück des Kabelmantels ausfallen kann.

In den Ausführungsbeispielen nach den Figuren 1 bis 6 ist die Weiche 8 in Vorschubrichtung hinter der Schneideinrichtung 6 angeordnet. Das heißt, durch eine entsprechende Stellung der Weiche 8 derart, dass diese einen Freiraum aufweist, kann am vorderen Ende 100a eines Kabelstücks 100 ein Vollabzug durchgeführt werden. Es kann dabei vorgesehen sein, dass die Weiche 8 in der vierten Position außerhalb, vorzugsweise oberhalb, der Vorschubstrecke positioniert ist, wobei die Weiche 8 nach Durchführung des Vollabzugs derart in die Vorschubstrecke zurückfahrbar ist, dass ein gegebenenfalls nicht vollständig von dem Kabelende 100a abgetrenntes Hülsenstück des Kabelstücks 100 abgeschlagen wird. Dies ist jedoch optional.

Um gemäß den Ausführungsbeispielen nach den Figuren 1 bis 6 auch am hinteren Ende 100b des Kabelstücks 100 einen Vollabzug durchführen zu können, ist ein grundsätzlich bekanntes Schwenkrohr 19 vor der Schneideinrichtung 6 vorgesehen. Das Schwenkrohr 19 kann, so wie dies in der US 5,445,051 A1 dargestellt ist, derart verschwenkt werden, dass das der Schneideinrichtung 6 zugewandte Ende des Schwenkrohres 9 beispielsweise in Bildrichtung nach oben verfährt, so dass ein entgegen der Vorschubstrecke zurückgefördertes Kabelstück 100 mit seinem hinteren Ende 100b in einen Freiraum gelangt.

Insofern die Weiche 8 vor der Schneideinrichtung 6 angeordnet ist, so wie dies beispielsweise in den Figur 17 dargestellt ist, kann das Schwenkrohr 19 entfallen. Die Erzeugung eines Freiraums kann dann dadurch erfolgen, dass die Weiche 8 entsprechend verfahren wird, so dass sich an der Stelle, die die Weiche 8 vorher eingenommen hat, ein Freiraum befindet. Gegebenenfalls kann in dieser Konstellation vorgesehen sein, dass nach der Schneideinrichtung 6 eine linear verfahrbare Führungshülse angeordnet ist, so wie dies beispielsweise aus der EP 0 860 044 B1 bekannt ist, damit auch an dieser Stelle gegebenenfalls ein Freiraum für einen Vollabzug zur Verfügung gestellt wird.

Wie in der Figur 17 prinzipmäßig dargestellt ist, kann entlang der Vorschubstrecke zu der Weiche 8 versetzt wenigstens eine zweite Weiche 8a ausgebildet sein, um das Kabelstück 100 an einer zweiten Stelle bei Bedarf aus der Vorschubstrecke auszulenken. In dem Ausführungsbeispiel nach Figur 17 ist die zweite Weiche 8a derart geschaltet, dass das Kabelstück 100 in Vorschubrichtung entlang der Vorschubstrecke transportiert werden kann. Die Weiche 8 ist derart geschaltet, dass ein hinteres Ende 100b des Kabelstücks 100 in Richtung auf die Bearbeitungseinheit 7 umgelenkt wird.

Grundsätzlich können entlang der Vorschubstrecke auch mehr als zwei Weichen vorgesehen sein.

Optional ist in Figur 17 auch noch die Möglichkeit dargestellt, eine Weiche 8 einzusetzen, die ausgebildet ist, um die Enden 100a, 100b des Kabelstücks 100 einer zweiten, der Weiche 8 zugeordneten Bearbeitungseinheit 7 zuzuführen. Die zweite Bearbeitungseinheit 7 ist strichliniert dargestellt. Grundsätzlich kann auch der Weiche 8a eine zweite Bearbeitungseinheit 7 zugeordnet werden. Insofern eine zweite Bearbeitungseinheit 7 vorgesehen ist, bietet es sich an, eine Weiche 8 mit fünf Führungen 9 einzusetzen, so wie dies in Figur 16 dargestellt ist. Grundsätzlich ist es selbstverständlich auch möglich, mit einer Weiche 8 gemäß Figur 7 zwei Bearbeitungseinheiten 7 zu bedienen, wenn die Eingänge und die Ausgänge der Führungen 9 entsprechend angeordnet sind. Dies liegt im Ermessen des Fachmanns.

Grundsätzlich ist es bei allen Ausführungsformen möglich, auch wenigstens zwei Bearbeitungseinheiten 7 vorzusehen, wobei die Bearbeitungseinheiten linear hintereinander an einer Seite der Vorschubstrecke und/oder derart angeordnet sein können, dass die Vorschubstrecke zwischen zwei Bearbeitungseinheiten 7 verläuft. Es sind selbstverständlich auch mehr als zwei Bearbeitungseinheiten 7, beispielsweise vier oder sechs Bearbeitungseinheiten, einsetzbar.

In Fig. 17 ist lediglich bei einem Rollenpaar 5 eine Kabelführung dargestellt, vorzugsweise sind jedoch alle Rollenpaare 5 mit einer Kabelführung 12 versehen.

Die Ausführungsbeispiele nach den Figuren 1 bis 6 zeigen, dass die Vorschubeinrichtung 3, die Schneideinrichtung 6 und die Weiche 8 an oder in einem Maschinengehäuse 20 festgelegt sein können. In den Figuren ist vorgesehen, dass die Bearbeitungseinheit 7 von dem Maschinengehäuse 20 wegschwenkbar ist, derart, dass die Bearbeitungseinheit 7 bedarfsweise aus einem Arbeitsbereich entfernbar ist (nicht dargestellt). Die Bearbeitungseinheit 7 ist in den Ausführungsbeispielen auf einer Plattform 7a angeordnet, die verschwenkbar mit einer Plattform 20a, beispielsweise einem Tisch, auf dem das Maschinengehäuse 20 angeordnet ist, verbunden ist. Die Plattform 7a kann hierzu eine Dreh- bzw. Schwenkachse aufweisen.

Die Bearbeitungseinheit 7 kann auch direkt schwenkbar mit dem Maschinengehäuse 20 verbunden sein.

Alternativ dazu kann auch vorgesehen sein, dass die Bearbeitungseinheit 7 linear verschiebbar mit dem Maschinengehäuse 20 oder der Plattform 20a, auf der das Maschinengehäuse 20 steht bzw. angeordnet ist, verbunden ist. Weiter alternativ kann auch vorgesehen sein, dass die Bearbeitungseinheit 7 auf einem von dem Maschinengehäuse 20 unabhängig verfahrbaren Gestell (nicht dargestellt) angeordnet ist.

## Patentansprüche

1. Vorrichtung zur Bearbeitung von Kabeln (1), mit einer Vorschubeinrichtung (3), um das Kabel (1) entlang einer Vorschubstrecke zu transportieren und zu positionieren, einer Schneideinrichtung (6) zum Abschneiden eines Kabelstücks (100) von dem Kabel (1) derart, dass das Kabelstück (100) zwei Enden (100a, 100b) aufweist, wenigstens einer Bearbeitungseinheit (7) zum Bearbeiten wenigstens eines Endes (100a,100b) des Kabelstücks (100), einer Weiche (8) mit einer Mehrzahl von Führungen (9), und mit einer Steuerung (10), um die Weiche (8) in der Vorschubstrecke derart zu positionieren, dass das Kabelstück (100) in eine der Führungen (9) einfahrbar ist, wobei wenigstens eine Führung (9) ausgebildet ist, um das Kabelstück (100) von der Vorschubstrecke auszulenken, um ein Ende (100a,100b) des Kabelstücks (100) der wenigstens einen Bearbeitungseinheit (7) zuzuführen, wobei
die Führung (9), um das Kabelstück (100) von der Vorschubstrecke auszulenken, einen Eingang (16), einen umfangsseitig geschlossenen Führungskanal (17) und einen Ausgang (18) aufweist, wobei sich der Durchmesser des Führungskanals (17) zwischen dem Eingang (16) und dem Ausgang (18) verjüngt, und
die Vorschubeinrichtung (3) wenigstens ein motorisch angetriebenes Bandförderpaar (4) umfasst, wobei das Kabelstück (100) zwischen den beiden Bandförderern (4a) des Bandförderpaars (4) durchführbar ist und/oder die Vorschubeinrichtung (3) wenigstens ein motorisch angetriebenes Rollenpaar (5) umfasst, wobei das Kabelstück (100) zwischen den Rollen (5a) des Rollenpaars (5) durchführbar ist, wobei zusätzlich zu dem Rollenpaar (5) eine Kabelführung (12) vorgesehen ist, welche in der Vorschubstrecke des Kabelstücks (100) zwischen den beiden Rollen (5a) positioniert ist und für beide Rollen (5a) jeweils eine Aussparung (13) aufweist, derart, dass die Rollen (5a) in die Kabelführung (12) eingreifen können, um das Kabelstück (100) zu transportieren.

2. Vorrichtung nach Anspruch 1,
**dadurch gekennzeichnet, dass**
die Kabelführung (12) und die beiden Rollen (5a) derart angeordnet sind, dass die Rollen (5a) die Aussparungen (13) derart verschließen, dass das Kabelstück (100) entlang der Aussparung (13) von der Kabelführung (12) und den beiden Rollen (5a) umfangsseitig wenigstens annähernd vollständig geschlossen umfasst ist.

3. Vorrichtung nach Anspruch 1 oder 2,
**dadurch gekennzeichnet, dass**
die Aussparungen (13) in die Kabelführung (12) derart eingebracht sind, dass zwei gegenüberliegend angeordnete seitliche Stege (12c) verbleiben, welche ein vorderes Ende (12a) der Kabelführung (12) mit einem hinteren Ende (12b) der Kabelführung (12) verbinden, und welche geeignet sind, das Kabelstück (100) in der Kabelführung (12) im Bereich der Aussparungen (13) gemeinsam mit den Rollen (5a) zu führen.

4. Vorrichtung nach einem der Ansprüche 1 bis 3,
**dadurch gekennzeichnet, dass**
die Aussparungen (13), in Längsrichtung betrachtet, jeweils die Form eines Kreissegments aufweisen und der Kreisbogen des Kreissegments wenigstens in dem Bereich, in dem die Rollen (5a) in die Aussparungen (13) eingreifen, an den Radius der jeweiligen Rolle (5a) angepasst ist.

5. Vorrichtung nach einem der Ansprüche 1 bis 4,
**dadurch gekennzeichnet, dass**
die Weiche (8) wenigstens drei Führungen (9), vorzugsweise drei Führungen (9) oder fünf Führungen (9), aufweist, wobei eine der Führungen (9) ausgebildet ist, um das Kabelstück (100) entlang der Vorschubstrecke zu führen und die anderen Führungen (9) ausgebildet sind, um das Kabelstück (100) von der Vorschubstrecke auszulenken, um ein Ende (100a,100b) des Kabelstücks (100) wenigstens einer der wenigstens einen Bearbeitungseinheit (7) zuzuführen.

6. Vorrichtung nach Anspruch 5,
**dadurch gekennzeichnet, dass**
die Vorschubeinrichtung (3), die Schneideinrichtung (6) und die Weiche (8) an oder in einem Maschinengehäuse (20) festgelegt sind, wobei die Bearbeitungseinheit (7) mit dem Maschinengehäuse (20) oder mit einer mit dem Maschinengehäuse (20) verbundenen Plattform (20a) schwenkbar oder linear verschiebbar verbunden ist, oder die Bearbeitungseinheit (7) auf einem von dem Maschinengehäuse (20) unabhängig verfahrbaren Gestell angeordnet ist, derart, dass die Bearbeitungseinheit (7) bedarfsweise aus einem Arbeitsbereich entfernbar ist.

7. Vorrichtung nach einem der Ansprüche 1 bis 6,
**dadurch gekennzeichnet, dass**
wenigstens zwei Bearbeitungseinheiten (7) vorgesehen sind, wobei die Bearbeitungseinheiten (7) linear hintereinander und/oder derart angeordnet sind, dass die Vorschubstrecke zwischen zwei Bearbeitungseinheiten (7) verläuft.

8. Vorrichtung nach einem der Ansprüche 1 bis 7,
**dadurch gekennzeichnet, dass**
der Führungskanal (17) einen ersten, dem Eingang (16) zugewandten Abschnitt (17a) aufweist, wobei der erste Abschnitt (17a) kreisbogenförmig verläuft und einen ersten Durchmesser aufweist, und wobei sich an den ersten Abschnitt (17a) ein zweiter, dem Ausgang (18) zugewandter Abschnitt (17b) anschließt, welcher vorzugsweise im Wesentlichen linear verläuft, wobei sich der zweite Abschnitt (17b) von dem ersten Durchmesser in Richtung auf den Ausgang (18) auf einen zweiten Durchmesser verjüngt.

9. Vorrichtung nach einem der Ansprüche 1 bis 8,
**dadurch gekennzeichnet, dass**
die Weiche (8) eine Mehrzahl von Platten (15), die zu einem Block zusammengesetzt sind, aufweist.

10. Vorrichtung nach Anspruch 9,
**dadurch gekennzeichnet, dass**
die Führungen (9), um das Kabelstück (100) von der Vorschubstrecke auszulenken, jeweils durch zwei zusammengesetzte Platten (15) gebildet sind, wobei jede Platte (15) eine Führungskontur (170) in der Art einer Führungsrinne aufweist, und zwei Führungskonturen (170) zusammengesetzt eine Führung (9) bilden.

11. Vorrichtung nach Anspruch 10,
**dadurch gekennzeichnet, dass**
wenigstens eine Platte (15) an ihren gegenüberliegenden Hauptflächen jeweils eine Führungskontur (170) aufweist, wobei an beiden Hauptflächen jeweils eine weitere Platte (15) ansetzbar ist, welche eine Führungskontur aufweist, die mit der in die jeweilige Hauptfläche eingebrachten Führungskontur (170) derart korrespondiert, dass die drei Platten (15) einen Block mit zwei vollständig geschlossenen Führungen ausbilden, wobei die Ausgänge (18) der Führungen (9) in dem Block in derselben Seitenfläche, vorzugsweise übereinander, angeordnet sind, während sich die Eingänge (16) der Führungen (9) an gegenüberliegenden Seitenflächen des Blocks befinden.

12. Vorrichtung nach einem der Ansprüche 1 bis 11,
**dadurch gekennzeichnet, dass**
wenigstens der Teil der Weiche (8), der die Führungen (9) ausbildet, um das Kabelstück (100) von der Vorschubstrecke auszulenken, aus einem reibungsoptimierten Kunststoff, vorzugsweise einem Kunststoff mit Graphit, besonders bevorzugt einem Polyethylen und ganz besonders bevorzugt einem UHMW-Polyethylen, ausgebildet ist.

13. Vorrichtung nach einem der Ansprüche 1 bis 12,
**dadurch gekennzeichnet, dass**
die Steuerung (10) eingerichtet ist, um die Weiche (8) wenigstens in die nachfolgenden vier Positionen zu stellen;
eine erste Position, um das Kabelstück (100) unausgelenkt entlang der Vorschubstrecke in und entgegen der Vorschubrichtung zu transportieren;
eine zweite Position, um das in Vorschubrichtung transportierte Kabelstück (100) von der Vorschubstrecke auszulenken, um ein in Vorschubrichtung vorne liegendes Ende (100a) des Kabelstücks (100) der wenigstens einen Bearbeitungseinheit (7) zuzuführen; eine dritte Position, um das entgegen der Vorschubrichtung transportierte Kabelstück (100) von der Vorschubstrecke auszulenken, um ein in Vorschubrichtung hinten liegendes Ende (100b) des Kabelstücks (100) der wenigstens einen Bearbeitungseinheit (7) zuzuführen; und
eine vierte Position, in der die Weiche (8) außerhalb der Vorschubstrecke positioniert ist, derart, dass die Vorschubstrecke in dem Bereich, den die Weiche (8) in den anderen Positionen einnimmt, einen Freiraum aufweist.

14. Vorrichtung nach Anspruch 13,
**dadurch gekennzeichnet, dass**
die Weiche (8) in der vierten Position oberhalb der Vorschubstrecke positioniert ist, wobei die Vorrichtung eingerichtet ist, um in der vierten Position einen Vollabzug an einem der Enden (100a,100b) des Kabelstücks (100) vorzunehmen, vorzugsweise am hinteren Ende (100b) des Kabelstücks (100), und wobei die Weiche (8) nach Durchführung des Vollabzugs derart in die Vorschubstrecke zurückfahrbar ist, dass ein gegebenenfalls nicht vollständig von dem Ende (100a,100b) des Kabelstücks (100) abgetrennter Abisolierrest des Kabelstücks (100) abgeschlagen wird.

## Claims

1. Apparatus for processing cables (1), having a feeding means (3) for transporting and positioning the cable (1) along a feeding route, a cutting means (6) for cutting a cable piece (100) from the cable (1) in such a way that the cable piece (100) has two ends (100a, 100b), at least one processing unit (7) for processing at least one end (100a, 100b) of the cable piece (100), a switch (8) with a plurality of guides (9), and a controller (10) for positioning the switch (8) in the feeding route in such a way that the cable piece (100) can be moved into one of the guides (9), wherein at least one guide (9) is configured to deflect the cable piece (100) from the feed path in order to feed one end (100a, 100b) of the cable piece (100) to the at least one processing unit (7),
**characterized in that**
in order to deflect the cable piece (100) from the feeding route, the guide (9) has an inlet (16), a circumferentially closed guide channel (17) and an outlet (18), the diameter of the guide channel (17) tapering between the inlet (16) and the outlet (18), and
the feeding means (3) comprises at least one motor-driven belt conveyor pair (4), wherein the cable piece (100) can be passed through between the two belt conveyors (4a) of the belt conveyor pair (4) and/or the feeding means (3) comprises at least one motor-driven roller pair (5), wherein the cable piece (100) can be passed through between the rollers (5a) of the roller pair (5), wherein, in addition to the roller pair (5), a cable guide (12) is provided, which is positioned in the feeding route of the cable piece (100) between the two rollers (5a) and has a recess (13) for both respective rollers (5a), in such a way that the rollers (5a) can engage in the cable guide (12) in order to transport the cable piece (100).

2. Apparatus according to claim 1,
**characterized in that**
the cable guide (12) and the two rollers (5a) are arranged in such a way that the rollers (5a) close the recesses (13) in such a way that the cable piece (100) is surrounded along the recess (13) by the cable guide (12) and the two rollers (5a) circumferentially at least approximately in a completely closed manner.

3. Apparatus according to claim 1 or 2,
**characterized in that**
the recesses (13) are introduced into the cable guide (12) in such a way that two lateral webs (12c) arranged opposite one another remain, which connect a front end (12a) of the cable guide (12) to a rear end (12b) of the cable guide (12), and which are suitable for guiding the cable piece (100) in the cable guide (12) in the region of the recesses (13) together with the rollers (5a).

4. Apparatus according to one of claims 1 to 3,
**characterized in that**
when viewed in the longitudinal direction, the recesses (13) each have the shape of a segment of a circle and the circular arc of the segment of the circle is adapted to the radius of the respective roller (5a) at least in the region in which the rollers (5a) engage in the recesses (13).

5. Apparatus according to any one of claims 1 to 4,
**characterized in that**
the switch (8) has at least three guides (9), preferably three guides (9) or five guides (9), one of the guides (9) being designed to guide the cable piece (100) along the feeding route and the other guides (9) being designed to deflect the cable piece (100) from the feeding route in order to feed one end (100a, 100b) of the cable piece (100) to at least one of the at least one processing unit (7).

6. Apparatus according to claim 5,
**characterized in that**
the feeding means (3), the cutting means (6) and the switch (8) are determined at or in a machine housing (20), wherein the processing unit (7) is connected to the machine housing (20) or to a platform (20a) connected to the machine housing (20) so as to be pivotable or linearly displaceable, or the processing unit (7) is arranged on a frame which can be moved independently of the machine housing (20) in such a way that the processing unit (7) can be removed from a working area as required.

7. Apparatus according to one of the claims 1 to 6,
**characterized in that**
at least two processing units (7) are provided, the processing units (7) being arranged linearly one behind the other and/or in such a way that the feeding route runs between two processing units (7).

8. Apparatus according to any of claims 1 to 7,
**characterized in that**
the guide channel (17) has a first section (17a) facing the inlet (16), wherein the first section (17a) is shaped as a circular arc and has a first diameter, and wherein the first section (17a) is followed by a second section (17b) facing the outlet (18), which preferably extends substantially linearly, wherein the second section (17b) tapers from the first diameter towards the outlet (18) to a second diameter.

9. Apparatus according to any one of claims 1 to 8,
**characterized in that**
the switch (8) comprises a plurality of plates (15) assembled into a block.

10. Apparatus according to claim 9,
**characterized in that**
the guides (9) for deflecting the cable piece (100) from the feeding route are each formed by two assembled plates (15), each plate (15) having a guide contour (170) in the manner of a guide trough, and two guide contours (170) together form a guide (9).

11. Apparatus according to claim 10,
**characterized in that**
at least one plate (15) has a respective guide contour (170) on its opposite main surfaces, a further plate (15) being attachable to each of the two main surfaces, which further plate (15) has a guide contour which corresponds to the guide contour (170) worked into the respective main surface in such a way that the three plates (15) form a block with two completely closed guides, wherein the outlets (18) of the guides (9) in the block are arranged in the same side surface, preferably above each other, while the inlets (16) of the guides (9) are located on opposite side surfaces of the block.

12. Apparatus according to any of claims 1 to 11,
**characterized in that**
at least that part of the switch (8) which forms the guides (9) for deflecting the cable piece (100) from the feeding route is formed from a friction-optimized plastic, preferably a plastic with graphite, particularly preferably a polyethylene and very particularly preferably a UHMW polyethylene.

13. Apparatus according to any of claims 1 to 12,
**characterized in that**
the controller (10) is configured to set the switch (8) at least in the following four positions:
a first position to transport the cable piece (100) undeflected along the feeding route in and against the feeding direction;
a second position to deflect the cable piece (100) transported in the feeding direction from the feeding route in order to feed an end (100a) of the cable piece (100), which is at the front in the feeding direction, to the at least one processing unit (7);
a third position for deflecting the cable piece (100) transported in the opposite direction to the feeding direction from the feeding route in order to feed an end (100b) of the cable piece (100) that is rearward in the feeding direction to the at least one processing unit (7); and
a fourth position in which the switch (8) is positioned outside the feeding route, such that the feeding route has a free space in the area which the switch (8) occupies in the other positions.

14. Apparatus according to claim 13,
**characterized in that**
in the fourth position the switch (8) is positioned above the feeding route, the apparatus being configured to perform a full pull-off in the fourth position at one of the ends (100a, 100b) of the cable piece (100), preferably at the rear end (100b) of the cable piece (100), and wherein the switch (8) can be moved back into the feeding route after the full pull-off has been carried out in such a way that any stripping residue of the cable piece (100) which may not have been completely separated from the end (100a, 100b) of the cable piece (100) is struck off.

## Revendications

1. Dispositif de traitement de câbles (1), avec un dispositif d'avancement (3), pour transporter et positionner le câble (1) le long d'un trajet d'avancement, un dispositif de coupe (6) pour couper un tronçon de câble (100) du câble (1) de sorte que, le tronçon de câble (100) comporte deux extrémités (100a, 100b), au moins une unité de traitement (7) pour traiter au moins une extrémité (100a, 100b) du tronçon de câble (100), un dispositif de changement de direction (8) avec une pluralité de guidages (9), et avec une commande (10) pour positionner le dispositif de changement de direction (8) dans le trajet d'avancement de sorte que le tronçon de câble (100) puisse pénétrer dans l'un des guidages (9), dans lequel au moins un guidage (9) est agencé, pour dévier le tronçon de câble (100) du trajet d'avancement, pour amener une extrémité (100a, 100b) du tronçon de câble (100) à ladite au moins une unité de traitement (7),
dans lequel le guidage (9), destiné à dévier le tronçon de câble (100) du trajet d'avancement, est pourvu d'une entrée (16), d'un canal de guidage (17) fermé sur sa périphérie et d'une sortie (18), dans lequel le diamètre du canal de guidage (17) se rétrécit entre l'entrée (16) et la sortie (18), et
le dispositif d'avancement (3) comprenant au moins une paire de bandes de transport (4) actionnées par un moteur, dans lequel le tronçon de câble (100) peut passer entre les deux transporteurs à bande (4a) de la paire de bandes de transport (4) et/ou le dispositif d'avancement (3) comprenant au moins une paire de galets (5) actionnée par un moteur, dans lequel le tronçon de câble (100) peut passer entre les galets (5a) de la paire de galets (5), dans lequel en plus de la paire de galets (5) un guidage de câble (12) est prévu, lequel est positionné dans le trajet d'avancement du tronçon de câble (100) entre les deux galets (5a) et présente une ouverture (13) pour chacun des deux galets (5a), de sorte que les galets (5a) puissent pénétrer dans le guidage de câble (12) pour transporter le tronçon de câble (110).

2. Dispositif selon la revendication 1,
**caractérisé en ce que**,
le guidage de câble (12) et les deux galets (5a) sont disposés de sorte que les galets (5a) ferment les ouvertures (13), de sorte que le tronçon de câble (100) soit au moins en partie presque entièrement enfermé sur sa périphérie le long de l'ouverture (13) par le guidage de câble (12) et les deux galets (5a).

3. Dispositif selon la revendication 1 ou 2,
**caractérisé en ce que**,
les ouvertures (13) sont ménagées dans le guidage de câble (12) de sorte que deux parties latérales (12c) disposées face à face subsistent et relient une extrémité avant (12a) du guidage de câble (12) avec une extrémité arrière (12b) du guidage de câble (12), et qu'elles conviennent pour guider le tronçon de câble (100) dans le guidage de câble (12) dans la zone des ouvertures (13) conjointement avec les galets (5a).

4. Dispositif selon l'une des revendications 1 à 3,
**caractérisé en ce que**,
les ouvertures (13), vues dans la direction longitudinale, ont chacune la forme d'un segment de cercle et **en ce que** l'arc de cercle du segment de cercle est adapté au rayon du galet (5a) respectif au moins dans la zone dans laquelle les galets (5a) pénètrent dans les ouvertures (13).

5. Dispositif selon l'une des revendications 1 à 4,
**caractérisé en ce que**,
le dispositif de changement de direction (8) est pourvu d'au moins trois guidages (9), de préférence trois guidages (9) ou cinq guidages (9), dans lequel l'un des guidages (9) est agencé pour guider le tronçon de câble (100) le long du trajet d'avancement et les autres guidages (9) sont agencés pour dévier le tronçon de câble (100) du trajet d'avancement, pour amener une extrémité (100a, 100b) du tronçon de câble (100) à ladite au moins une unité de traitement (7).

6. Dispositif selon la revendication 5,
**caractérisé en ce que**,
le dispositif d'avancement (3), le dispositif de coupe (6) et le dispositif de changement de direction (8) sont fixés sur ou dans un corps de machine (20), dans lequel l'unité de traitement (7) est reliée de manière pivotante ou mobile linéairement au corps de machine (20) ou à une plateforme (20a) reliée au corps de machine (20), ou l'unité de traitement (7) est disposée sur un bâti mobile indépendant du corps de machine (20), de sorte que l'unité de traitement (7) puisse être retirée d'une zone de travail si nécessaire.

7. Dispositif selon l'une des revendications 1 à 6,
**caractérisé en ce que**,
au moins deux unités de traitement (7) sont prévues, dans lequel les unités de traitement (7) sont disposées en ligne l'une derrière l'autre et/ou de sorte que le trajet d'avancement s'étende entre deux unités de traitement (7).

8. Dispositif selon l'une des revendications 1 à 7,
**caractérisé en ce que**,
le canal de guidage (17) est pourvu d'une première section (17a) orientée en direction de l'entrée (16), dans lequel la première section (17a) a une forme d'arc de cercle avec un premier diamètre, et dans lequel la première section (17a) est suivie d'une seconde section (17b) orientée en direction de la sortie (18) et s'étendant de préférence sensiblement linéairement, dans lequel la seconde section (17b) se rétrécit du premier diamètre dans la direction de la sortie (18) à un second diamètre.

9. Dispositif selon l'une des revendications 1 à 8,
**caractérisé en ce que**,
le dispositif de changement de direction (8) est pourvu d'une pluralité de plaques (15) qui sont assemblées en un bloc.

10. Dispositif selon la revendication 9,
**caractérisé en ce que**,
les guidages (9) destinés à dévier le tronçon de câble (100) du trajet d'avancement, sont formés chacun par deux plaques (15) réunies, dans lequel chaque plaque (15) est pourvue d'un contour de guidage (170) du genre d'une rainure de guidage, et deux contours de guidage (170) réunis forment un guidage (9).

11. Dispositif selon la revendication 10,
**caractérisé en ce que**,
au moins une plaque (15) est pourvue sur chacune de ses faces principales opposées d'un contour de guidage (170), dans lequel une autre plaque (15) peut être appliquée sur chacune de ces deux faces principales et est pourvue d'un contour de guidage correspondant au contour de guidage (170) ménagé dans la face principale correspondante, de sorte que les trois plaques (15) forment un bloc avec deux guidages entièrement fermés, dans lequel les sorties (18) des guidages (9) sont disposées dans le bloc sur la même face latérale, de préférence l'une au-dessus de l'autre, alors que les entrées (16) des guidages (9) se trouvent sur des faces latérales opposées du bloc.

12. Dispositif selon l'une des revendications 1 à 11,
**caractérisé en ce que**,
au moins la partie du changement de direction (8) formant les guidages (9) destinés à dévier le tronçon de câble (100) du trajet d'avancement est réalisée en une matière à frottement optimisé, de préférence une matière avec du graphite, de manière particulièrement préférée un polyéthylène et de manière tout particulièrement préférée un polyéthylène UHMW.

13. Dispositif selon l'une des revendications 1 à 12,
**caractérisé en ce que**,
la commande (10) est agencée pour placer le dispositif de changement de direction (8) au moins dans les quatre positions suivantes ;
une première position, pour transporter le tronçon de câble (100) sans déviation le long du trajet d'avancement dans la direction d'avancement et dans la direction opposée ; une deuxième position, pour dévier du trajet d'avancement le tronçon de câble (100) transporté dans la direction d'avancement, pour amener une extrémité (100a) du tronçon de câble (100) placée à l'avant par rapport à la direction d'avancement à ladite au moins une unité de traitement (7) ;
une troisième position, pour dévier du trajet d'avancement le tronçon de câble (100) transporté dans la direction d'avancement opposée, pour amener une extrémité (100b) du tronçon de câble (100) placée à l'arrière par rapport à la direction d'avancement à ladite au moins une unité de traitement (7) ;
une quatrième position, dans laquelle le dispositif de changement de direction (8) est positionné hors du trajet d'avancement, de sorte que le trajet d'avancement présente un espace libre dans la zone occupée par le dispositif de changement de direction (8) dans les autres positions.

14. Dispositif selon la revendication 13,
**caractérisé en ce que**,
le dispositif de changement de position (8) est positionné, dans la quatrième position, au-dessus du trajet d'avancement, dans lequel le dispositif est agencé pour réaliser, dans la quatrième position, un dénudage complet de l'une des extrémités (100a, 100b) du tronçon de câble (100), de préférence à l'extrémité arrière (100b) du tronçon de câble (100), et dans lequel le dispositif de changement de direction (8) peut être reculé sur le trajet d'avancement après réalisation du dénudage complet de sorte à détacher un résidu d'isolation du tronçon de câble (100) éventuellement non entièrement séparé de l'extrémité (100a, 100b) du tronçon de câble (100).
